(19) Europäisches Patentamt
European Patent Office
Office européen des brevets

(11) Publication number: **0 074 274**
**B1**

# (12) EUROPEAN PATENT SPECIFICATION

(45) Date of publication of patent specification: **05.03.86**

(51) Int. Cl.[4]: **C 08 L 53/02,** C 04 B 35/00

(21) Application number: **82304694.1**

(22) Date of filing: **08.09.82**

## (54) Mouldable composition and methods for producing moulded bodies therefrom.

(30) Priority: **08.09.81 US 300368**
**08.09.81 US 300369**
**08.09.81 US 300404**

(43) Date of publication of application:
**16.03.83 Bulletin 83/11**

(45) Publication of the grant of the patent:
**05.03.86 Bulletin 86/10**

(84) Designated Contracting States:
**DE FR GB IT**

(56) References cited:
**EP-A-0 010 834**

(73) Proprietor: **FORD MOTOR COMPANY LIMITED**
**Eagle Way**
**Brentwood Essex CM13 3BW (GB)**
(84) **GB**

(73) Proprietor: **FORD-WERKE AKTIENGESELLSCHAFT**
**Ottoplatz 2 Postfach 21 03 69**
**D-5000 Köln 21 (DE)**
(84) **DE**

(73) Proprietor: **FORD FRANCE SOCIETE ANONYME**
**344 Avenue Napoléon Bonaparte B.P. 307**
**F-92506 Rueil Malmaison Cedex (FR)**
(84) **FR**

(73) Proprietor: **Ford Motor Company**
**The American Road**
**Dearborn, MI 48121 (US)**
(84) **IT**

(72) Inventor: **Theodore, Ares Nicholas**
**34974 Valley Forge Dr.**
**Farmington Hills Michigan 48018 (US)**
Inventor: **Pett, Robert Allan**
**31063 Franklin Rd.**
**Franklin Michigan 48025 (US)**

**EP 0 074 274 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

(74) Representative: **Drakeford, Robert William et al**
**Ford Motor Company Limited 15/448, Research**
**& Engineering Centre Laindon**
**Basildon Essex SS15 6EE (GB)**

**Description**

This invention relates to moldable compositions and the production of molded bodies therefrom. More specifically, the invention relates to the preparation of precursors, also known as green bodies, for sintered articles.

Isostatic pressing of sinterable particulate solids is a known technique for preparation of sinterable articles not having complex configurations. For articles having complex shapes, e.g. flanges, isostatic pressing is unsuitable since it does not yield consistently desirable green bodies and sintered articles.

Techniques have been developed for the preparation of beta"-alumina tubular ceramic bodies in which a ceramic-binder composition is isostatically pressed in a tubular mold, after which binder is burned off, and then the tubes are sintered. However, this isostatic method is not well suited to the preparation of tubes, particularly those having thin wall thicknesses, as used in sodium-sulfur cells, because of the formidable problems associated with mold filling prior to isostatic pressing and sample removal after pressing.

U.S. Patents 4,158,688 and 4,158,689 disclose preparation of green bodies of unusual dimensional precision using sacrificial binders. In these patents, the green bodies formed include compression molded cordierite ribbed sheets and extrusion molded beta"-alumina precursor particulate tubes. However, neither the binder composition used with the cordierite nor the extrusion composition used to make the tubes is optimal for use in compression molding of the beta"-alumina precursor particulate green bodies.

Particulate solids such as beta"-alumina ceramic precursor particulate have special properties inhibiting their facile shaping into dense, highly contoured sintered articles. As opposed to cordierite particulate solids, they are not as readily wetted by the binder ingredients. Furthermore, certain forms of such beta"-alumina precursor particulates inhibit the flow of sacrificial binder compositions containing them. Thus, in compression molding, there is a tendency of sacrificial binder compositions (containing sufficiently high amounts of particulate to prepare a dense ceramic) to resist flow into complex shapes or give articles with surface imperfections, if such a resistance to flow can be overcome.

According to the present invention there is provided:—

A moldable composition comprising a mixture of from 40 to 60 volume percent of sinterable beta"-alumina particulate solids and from 50 to 40 volume percent of organic sacrificial binder characterised in that the sacrificial binder comprises:—

(a) a thermoplastic block copolymer selected from the group consisting of linear, radial and linear and radial block copolymers, said block copolymers having a first aromatic block which is glassy or crystalline at 20—25°C, and which has a softening point of from 80 to 250°C and a second aliphatic block which is different from said first block and behaves as an elastomer at temperatures of from 15°C below and 100°C above said softening point of said first block;

(b) at least one oil at least 75 percent by weight of which boils in a range of from 285 to 560°C, and which has a viscosity of from 30 to 220 Saybolt Universal Seconds (SUS) at 100°C and an Aniline Point in a range of from 75 to 125°C;

(c) at least one wax melting at a temperature of from 55°C to 80°C, and at least 75 percent by weight of which boils at temperatures in a range of from 315°C to 490°C;

(d) at least one first stiffening thermoplastic polymer which is glassy or crystalline at 20—25°C and which has a softening point between about 80—250°C and comprises aromatic monomeric units associable with block copolymer (a); and

(e) at least one second stiffening thermplastic polymer, different from said first polymer and which is glassy or crystalline at 20°—25°C, and which has a softening point between about 80—250°C and comprises aromatic monomeric units associable with block copolymer (a), the weight of (a) being greater than the weights (b) and (c) combined, greater than the weights of (d) and (e) combined, and greater than twice the weights of (b) (c), (d) or (e) alone.

The moldable compositions of the invention are especially suitable for compression molding and extrusion.

One embodiment of the invention provides a compression molding method for preparing dimensionally precise, highly contoured green bodies. This method comprises loading the moldable composition of the invention into a mold member having a cavity and a recess in the cavity, the mixture being located such that a first amount is provided in the cavity adjacent the recess and a second amount is provided in the recess; applying heat and pressure to the first and second amounts between the mold member and another mold member to urge together the first and second amounts; and maintaining the heat and pressure for a time sufficient to knit together portions of the first and second amounts in conformity with the cavity.

In a preferred embodiment the method comprises providing the mixture, wherein the thermoplastic block copolymer component consists essentially of a radial block copolymer, in a first mold member having a cavity and a recess adjacent the perimeter of the mold in the cavity, the mixture being located such that a first amount is provided in the cavity adjacent the recess and a second amount is provided in the recess. It further comprises providing the mixture in a second mold member, having a cavity and a recess adjacent the perimeter of the mold, in the cavity such that a third amount is provided in the recess. The recesses of the first and second mold members align when the mold members are brought together.

A further embodiment of the invention provides an extrusion process by which tubing can be produced in a continuous manner. The process comprises extruding the moldable composition of the invention over a mandrel at a rate which allows extrusion of a length of smooth tube.

The compositions used in this embodiment of the invention preferably include a processing aid which is an ester of a fatty acid.

The order of mixing of the composition is preferably as follows:—

the thermoplastic block copolymer (a), the sinterable particulate, the wax (c), the stiffening agent (d and e), the oil (b), and the processing aids (f). The extruding means contains an extrusion die wherein the ratio of the length of the die to the wall thickness of the tube being extruded is greater than about 5:1.

In the preferred embodiment, wherein the beta"-alumina precursor particulate consists essentially of 8.85 weight percent $Na_2O$, 0.75 weight percent $Li_2O$ and 90.4 weight percent $Al_2O_3$, the temperature of the extrudate is preferably maintained between about 135°—150°C during extrusion.

The moldable compositions of the invention are also especially suitable for the manufacture of composite bodies from two or more components molded therefrom and connected together by ultrasonic welding. In this respect the compositions of the invention are useful in the production of end-capped tubes.

Beta"-alumina tubes need to be end-capped at one end in order to be used in construction of sodium-sulfur batteries or similar energy conversion devices. Ultrasonic end-capping as taught in this invention, can proceed by either of two routes, ultrasonic forming or ultrasonic bonding, with the latter being preferred.

During the end-capping process, the ultrasonic vibrations from the ultrasonic horn are transmitted to the part and travel to the joint area of interface. Here the vibratory energy is dissipated in the form of frictional heat which melts the binder and welds the joining surfaces.

While ultrasonic bonding technique is known, it has only been used to bond materials of thermoplastic compositions. In contrast, the composition of the tubular bodies of the subject invention comprise a thermoplastic elastomer binder in combination with ceramic particulate. In view of the different characteristics of thermoplastic elastomers, it was not expected that such technique could be used to bond compositions containing these elastomers. Further, using beta"-alumina particulate precursor in the composition of the tubes, in view of its hydroscopic nature, was expected to result in an unsatisfactory bond due to the foaming conditions that were expected to develop at the joint interface of such materials during bonding. Still further, the composition of the tubular bodies, which includes waxes and oils as plasticizers, was not felt suitable for ultrasonic technique in view of the fact that these included materials usually interfere with the resins ability to transmit vibratory energy. Also, the inclusion of high levels of precursor ceramic, as in the subject composition, was thought to preclude the presence of a sufficient amount of binder material deemed necessary for successful bonding. Tubes which have been extruded using the composition of this invention had previously been end-capped using solvent bonding. However, that technique is less reliable due to such problems as bubbling of the solvent and misalignment of the cap to the tube.

In the preferred embodiment of this invention, the moldable composition contains a fatty acid ester processing aid. This composition is formed into a tube, for example as described above. An end-cap is then formed from the composition. Pressure and ultrasonic vibrations are applied by means of an ultrasonic horn to the tubular green body and end-cap between a tubular mandrel and the ultrasonic horn, the pressure and ultrasonic vibrations being maintained for a time necessary for the ultrasonic vibrations to travel to the tubular body end-cap interface wherein they are dissipated in the form of frictional heat and melt the thermoplastic elastomer binder so as to weld the joining surfaces. The mandrel has a shaped end of desired configuration and the ultrasonic horn has a female mold shape adapted to receive the mandrel with the tubular body disposed thereon.

More particularly in ultrasonic bonding, the end-cap is first formed by molding or stamping from the same ceramic binder composition as is used to form the tube. This end-cap is then placed on the top of the mandrel having the tubular green body thereon or up into the horn. Most preferably, the tubular mandrel has a hemispherically shaped end as does the face of the horn. In ultrasonic forming, the end-cap is formed by forcing the tubular green body between the mandrel and the ultrasonic horn both of which preferably have a hemispherical end shape while ultrasonic vibrations are applied through the horn.

Embodiments of the invention will now be described, by way of example only, with reference to the drawings, in which:—

Figure 1 is a perspective view of a green body made from a moldable composition in accordance with the invention,

Figure 2 is a top view of the body of Figure 1,

Figure 3 is a bottom view of the body of Figure 2,

Figure 4 is a perspective view of compression molding apparatus used in an embodiment of one method of the invention,

Figure 5 illustrates equipment suitable for extruding tubes of the moldable composition in accordance with an embodiment of an alternative method of the invention.

Figure 6 is a fragmentary sectional view of the equipment of Figure 5;

Figure 7 illustrates ultrasonic welding equipment suitable for performing a further alternative method of the invention, and

Figure 8 is a fragmentary cross-sectional view of the equipment of Figure 7.

Each of the components of the moldable composition within the scope of the invention as well as the processing steps are described hereinafter in greater detail.

In this process, the beta"-alumina percursor particulate is mixed with the binder ingredients on a roll mill, after which perform strips and rectangles are cut from a milled sheet. In one embodiment of the preferred process, and as detailed in Example 1, three of these rectangular preforms are stacked in the middle of bottom mold plate A depicted in Figure 4. However, either mold plate A or mold plate B may be used as the bottom mold plate with respect to these rectangular preforms. Four preform strips are placed into the edge recesses of the top mold plate and four preform strips are placed into the edge recesses 2 of the bottom mold plate. The molds are preheated prior to placement of the preforms therein. The mold is then assembled by means of corner pin 3 and hole 4 which brings into alignment edge recess 1 of the top plate and recess 2 of the bottom plate, which mold recesses will result in the formation of the green body edge 5 shown in perspective view in and in top and bottom views of the green body in Figures 2 and 3. In this preferred embodiment, the top and bottom mold cavities are similar. However, the depth of the cavity of mold plate B is greater than the depth of the cavity of mold plate A, as depicted in Figure 4. The cavity of top mold plate B additionally contains three parallel depressions 7, which will generate ribs 8 of the green body, shown in Figures 1 and 2. These ribs add structural strength to the green body. The assembled mold is subject to heat and pressure and any excess material is forced out of the mold. Molding pressures of 125—370 psi, preferably 215—295 psi have been found to be most suitable. After terminating the pressure and cooling the mold, the four set screws 6 of the top mold plate are turned against the bottom mold plate in order to open the mold evenly. Figure 3 illustrates the bottom view of the green body which will be formed by bottom mold plate A, and Figure 2 illustrates the top view of the green body which will be formed by top mold plate B. The green bodies can be stored in polyethylene bags. Prior to use, as for example, in the sodium/sulfur battery, the green bodies are subjected to binder burn out followed by sintering of the ceramic particulate.

Sacrificial binder

The sacrificial binders of this invention comprise a major amount by weight of a block copolymer thermoplastic elastomer, plasticizer therefor and thermoplastic polymer.

The block copolymer may be a linear block copolymer such as is disclosed in U.S. Patent 4,158,689, a radial block copolymer such as is disclosed in U.S. Patent 4,148,688, or a combination of these block copolymers. The disclosures of U.S. Patents 4,158,688 and 4,158,689 are hereby incorporated by reference.

Suitable radial block polymers for use in this invention are those having the structural formula

$$X—[B—(AB)_{\alpha}—A]_{\alpha'}$$

wherein "X" is a linking group, A or B, "α" is 0 or a positive integer, "α'" is a positive integer greater than 2, "A" is a linear or branched polymer that is glassy or crystalline at room temperature 80—250°C and has its softening point in the range of about 80°C. to about 250°C. and "B" is a polymer different from "A" that behaves as an elastomer at processing temperatures, i.e., between about 15°C below and about 100°C above the softening point of "A".

Suitable linear block polymers for use in this invention are those having the structural formula

$$AB—(AB)_{\alpha}—A$$

wherein "α" is 0 or a positive integer, "A" is a linear or branched polymer that is glassy or crystalline at room temperature and has a softening point in the range of about 80°C. to about 250°C. and "B" is a polymer different from "A" that behaves as an elastomer at processing temperatures.

Linear and radial block copolymers are widely known. Commercially available linear and radial block copolymers are Kratons and Solprenes, respectively. Kraton is a tradename of Shell Oil Company and Solprene is a tradename of Phillips Petroleum Company. Other examples of these polymers appear in *Rubber Technology,* "Thermoplastic Elastomers", Hendricks et al, 2nd Edition, pp. 515—533, VAN NOST RAND, N.Y. (1973) and *Rubber World,* "Compounding Radial Block Copolymers".

The binders of this invention preferably comprise a block copolymer consisting essentially of thermoplastic radial block copolymer. Of the radial block copolymers, those with aforedescribed "A" and "B" blocks are preferred, with aromatic "A" block and aliphatic "B" block being preferred. Other "A" and "B" blocks appear in Col. 2, line 56 through Col. 3, line 3 of U.S. Patent 4,158,688. The preferred radial block copolymers, suitable for use in this invention have molecular weights ($\overline{M}_w$) of about 100,000—200,000, a specific gravity between 0.9—1., and an apparent viscosity of between about 40—50 thousand poise at 10 seconds$^{-1}$ at about 20—25°C.

The molecular weights of the "A" segments and the "B" segments of the block copolymers suitable for use in the method of this invention will vary with the polymer segment involved as will be obvious to one skilled in the art in that physical characteristics must be met as hereinbefore recited. For instance, where the block copolymer has polystyrene "A" blocks and polybutadiene "B" blocks, preferably unsaturated polybutadiene, the polystyrene segments advantageously have number average molecular weights ($\overline{M}_n$)

below about 20,000 and at least two of such segments have molecular weights ($\overline{M}_n$) above about 10,000. While the polybutadiene segments advantageously have molecular weights ($\overline{M}_n$) below about 80,000 and at least one such segment has a molecular weight ($\overline{M}_n$) above about 15,000. The lower limit of molecular weight ($\overline{M}_n$) for the two "A" blocks is governed by the minimum. "A" block chain length required to insure the formation of a heterogeneous phase while the upper limit of "A" blocks is set by the viscosity of both "A" and "B" blocks when such viscosity begins to hamper domain formation or processing.

The sacrifical binder employed in the method of this invention includes a plasticizer comprising oil and a wax in combination. The oils and waxes used for this purpose are naphthenic, paraffinic or a mixture of paraffinic and naphthenic constituents. They are sufficiently volatile to be removed easily and rapidly in the burn-out process but insufficiently volatile to be substantially removed during mixing and/or molding. The loss due to volatilization during mixing and/or molding is advantageously below 20 and preferably below 10 weight percent. The selection is such that their evolution during burn out takes place over a broad temperature range, thus avoiding stress points and defects in parts.

Functionally, the oils and waxes must be compatible with the rubbery phase of the principal binder resin when it becomes rubbery on plasticization at a temperature somewhat below the softening point of the "A" segments of the principal resin. This gives the binder a capability of accepting higher filler loadings while remaining strong and flexible.

At least 75% by weight of the oils used as plasticizers boil in the range of about 285°C. to about 560°C., preferably in the range of about 285°C. to about 465°C. They have viscosities at 100°F. in the range of about 30 to about 220 Saybolt Universal Seconds, hereinafter referred to as S.U.S., advantageously in the range of about 35 to about 155 S.U.S., and preferably in the range of about 35 to about 80 S.U.S. These oils have an Aniline Point in the range of about 75°C. to about 125°C. The oils may be a product of petroleum refining operations or vegetable or animal oils and they may include or be low molecular weight synthetic polymers such as polystyrene, poly(alpha-methyl styrene), or a polyolefin. Examples of suitable commercially available oils include Flexon 580, 680, 765 and 845 marketed by Exxon and Shellflex 131, 371 and 790 marketed by Shell Chemical Co.

The waxes used have melting points in the range of about 55°C. to about 80°C. At least about 75% by weight of such wax boils at temperatures in the range of about 315°C. to about 490°C. These may be a product of petroleum refining operations, vegetable or animal oils or synthetic polymers such as low molecular weight polyolefins. Examples of suitable commercially available waxes are Sunoco Wax 3420, 4412 and 4418 marketed by Sun Chemical as well as paraffin wax (M.P. 54°C.) marketed by International Wax Refining.

The binder of this invention further includes a first and a second stiffening thermoplastic polymer which are glassy or crystalline at 20—25°C, have a softening point between about 80—250°C and comprise aromatic monomeric units associable with the block copolymer. The stiffening polymer preferably has a molecular weight in the range between about 50,000 and 400,000, more preferably 100,000 and 300,000, wherein such molecular weight refers to a weight average molecular weight (Flory). The second stiffening polymer is different from the first stiffening polymer and also functions as a tackifying thermoplastic polymer. Preferred second stiffening polymers have a melt viscosity of about 10 poises at 157—205°C.

For example, if the "A" block of the block copolymer is a polystyrene, then the first stiffening thermoplastic polymer preferably is a polystyrene or other thermoplastic aromatic polymer. In addition to stiffening, such a thermoplastic polymer should also aid in mixing the sacrificial binder composition ingredients. A thermoplastic polystyrene polymer such as Styron 495, marketed by Dow Chemical Company, does this because it has a lower viscosity than the thermoplastic block copolymer at processing conditions; on the other hand it is sufficiently crystalline at room temperature to advantageously stiffen the formed green body. Furthermore, according to this example, if the first stiffening polymer is polystyrene as mentioned, the second stiffening polymer is aromatic but has a different aromatic moiety, e.g., indene. A preferred second polymer is polyindene. Low molecular weight polyidenes have the further advantage of low viscosity at processing conditions. The low viscosity aids flow of the sacrificial binder compositions.

Using two different polymers also advantageously permits the sequential expulsion of the stiffening polymers during firing of the green bodies.

In this particulate binder mixture, the weight of the thermoplastic block copolymer is greater than the weight of the oil and wax combined, and greater than the weight of the stiffening polymers combined. The weight of the block copolymer is also greater than two times the weight of the oil, the wax, the first stiffening polymer or the second stiffening polymer alone.

Other ingredients may be employed in the binders of this invention. For example, antioxidants are useful to retard oxidative degradation of the block polymer during mixing, thus minimizing loss of strength in the green body. The antioxidant also allows more rapid removal of binder during burn-off by minimizing surface oxidation which may tend to seal off the surface. Suitable antioxidants include, but not by way of limitation, 2,6 - ditert - butyl - phenol, a polymerized 1,2 - dihydro - 2,2,4 - trimethyl quinoline, 2 - mercaptobenzimidazole, tetra - bis - methylene - 3 - (3,5 - ditert - butyl - 4 - hydroxyphenyl) propionate methane, etc.

Process aids which are conventional to molding and forming operations with polymeric materials are likewise useful in the practice of this invention. They may be sprayed on the mold or incorporated into the mixture to improve the release characteristics of the green body from the molding apparatus with which

the green body comes in contact. When incorporated into the mixture, they can also be used to improve the flow characteristics of the binder-filler mixture during molding operations. Process aids which may be of assistance include fluorocarbon mold release agents, methylacetylricinoleate, stearic acid, polyethylene, polyethylene wax, mixtures, of natural waxes and wax derivatives, vegetable fats, partially oxidized polyethylene, etc. Others will be apparent to those skilled in the art.

Sinterable particulate

The powdered beta"-alumina precursor particulate most useful in the practice of the method of this application has a broad particle size distribution, i.e. about 0.1—1500 microns, with a preferred average particle size of below about 3.5 microns. It has been found that using a broad distribution of particle sizes permits better flow of the sacrificial binder-particulate compositions during molding. This precursor particulate is prepared by combining sodium carbonate, lithium nitrate and alpha-alumina, calcining and then milling for about 1 hour in a polyethylene container using high purity alumina balls to break down agglomerates. The ratio of the reagents is chosen so that the final product (powdered B"-alumina precursor particulate) preferably has a composition of a) 8.7% soda/0.7% lithia/90.6% alumina, or (b) 8.85% soda/0.75% lithia/90.4% alumina, or (c) 9.25% soda/0.25% lithia/90.5% alumina (% by weight). Other less suitable ratios of soda/lithia/alumina can be used in practicing the method of this invention.

The weight proportion of binder to particulate solids of beta"-alumina may vary widely, but is preferably as high as possible for dense bodies. Normally, the weight ratio of binder to beta alumina particulate solids will be about 1:2 to 1:7, more preferably for very dense bodies between about 1:4 to 1:6.

The following examples are presented by way of description of the compression molding method of the invention.

Example 1

A plate-type, green body as illustrated in Figures 1, 2 and 3 was made by compression molding of binder/ceramic compositions. The binder/beta"-alumina precursor compositions were prepared by combining the following ingredients:

| Material | Amount, grams |
|---|---|
| Solprene 414C | 5.36 |
| Agerite Resin D | 0.53 |
| Sunoco Wax 3420 | 1.04 |
| Sunoco Wax 4412 | 0.81 |
| Styron 495 | 0.66 |
| Picco 6140-3 | 0.68 |
| Flexon 845 | 0.43 |
| Shellflex 371 | 1.47 |
| Flexricin P-4 | 0.94 |
| Powdered beta"-alumina precursor (8.85% soda/0.75% lithia/90.4% alumina) | 50.00 |

a) The preparation of a powdered beta"-alumina precursor:

Dried samples of sodium carbonate and lithium nitrate were mixed with alumina and milled for one hour in a polyethylene container using high-purity alumina balls. The ratio of reagents was chosen so that the final products would have compositions of 8.7% soda/0.7% lithia/90.6% alumina, 8.85% soda/0.75% lithia/90.4% alumina, and 9.25% soda/0.25% lithia/90.5% alumina.

In order to develop the proper rheological properties of the molding composition, two different batches of beta"-alumina precursor were prepared for each composition and subsequently blended. One batch was prepared using Linde C alumina, average particle size of one micrometer, and the other was made using Alcoa XA-16-SG, a ground alpha-alumina powder having a wide distribution of particle sizes ranging from about forty micrometers to less than one micrometer. The powders were calcined separately for two hours at 1260°C in platinum crucibles. On cooling, the powders were individually crushed and milled for one hour in polyethylene vessels using alumina balls. The two powders were combined in equal parts in a plastic vessel containing alumina balls and shaken together for 30 minutes on a paint shaker.

b) Mixing of powder with the binder ingredients:

The mixing of binder compositions was carried out on an 80×180 mm two roll vented research mill. The mill rolls were electrically heated with individual heat controls and chrome coated. The mill speed was 32 m per minute and had a friction ratio of 1.4 to 1. The gap between the rolls varied from 0.17 to 0.76 mm during mixing. The temperature of both rolls was set at 310°F and allowed to stabilize before mixing the ingredients of a typical binder particulate composition:

| Material | Amount, grams |
|---|---|
| Solprene 414C | 5.36 |
| Agerite Resin D | 0.53 |
| Sunoco Wax 3420 | 1.04 |
| Sunoco Wax 4412 | 0.81 |
| Styron 495 | 0.66 |
| Picco 6140-3 | 0.68 |
| Flexon 845 | 0.43 |
| Shellflex 371 | 1.47 |
| Flexricin P-4 | 0.94 |
| Powdered beta"-alumina precursor 8.85% soda/0.75% lithia/90.4% alumina | 50.00 |

The order of addition of binder ingredients and specific conditions used in the mixing steps are listed below:

1. The roll gap was set at 0.17 mm and the thermoplastic elastomer (Solprene 414) was added. As soon as a Solprene 414 melt was formed on the rolls, 5% by wt. of the beta"-alumina precursor and all of the Agerite Resin D were slowly added. These ingredients were allowed to mix for about 40 seconds before proceeding.

2. The mill rolls were periodically opened and the rest of the beta"-alumina precursor was added. The gap between the two rolls was maintained at 0.70—0.76 mm by the completion of the beta"-alumina addition.

3. A petroleum (Sunoco 3420) was added slowly and the banded material was cut twice. The temperature of the rolls was raised to 320°F and the remaining petroleum (Sunoco 4412) was added slowly. The powdery material falling off the mill rolls was placed on the mill rolls continuously. Banded material at edges of rolls was cut with a sharp knife and placed on the center of the rolls repeatedly.

4. After the mill rolls were closed to 0.5 mm, the polystyrene (Styron 495) and polyindene resin (Picco-6140-3) were added to the mix in that order. The mix was still crumbling at this stage. The banded material at edges of rolls was cut continuously and placed in center of rolls until completion of mixing.

5. The temperature was reduced to 290°F before addition of the petroleum oils (Flexon 845 and Shellflex 371). The oils were added one-third at a time with cutting of the banded material between additions. This was followed with cutting of the material at the edges of the rolls and returning the cut and crumbled material to the middle of rolls.

6. The mill rolls were opened to 0.65 mm, and then the Flexricin P-4 was added slowly while cutting the banded material.

7. Upon completion of the addition of all ingredients, the mix was cut at the edges of the rolls and sliced in the middle of the rolls for five minutes. The cut material was returned to the center of the rolls.

8. Mixing was completed with 40—45 minutes after which the temperature was reduced to 250°F to allow easier removal of the material from the mill rolls.

9. The mill was set at a speed of 0.1 m per minute and the mix was sliced off the mill and transferred to the bench for cooling and preforming.

At the completion of the mixing cycle, the binder composition was homogeneous and tough.

c) Preparation of preforms from the mixed composition:

Preforms were either cut directly from freshly mixed material or from remixed material. Remixing was required to combine ingredients which had undergone phase separation and was assumed necessary if the material was more than four hours hold. To accomplish the remixing, the mixed material is returned to the heated mill rolls (150°C) and mixed for five minutes with continuous cutting of the banded stock. The mill

was run at a speed of 3.2 m per minute with an initial gap between rolls of 0.75 mm. For preforming, the mill gap was increased to 2.9 mm and the edges of the band were smoothed by moving material from the edges to the center of the band. When a smooth sheet had been established, the roll temperature was reduced to 90°C to allow removal of the mixture from the rolls. After removal from the rolls, the strip was pressed flat on a metal bench. Preforms were prepared from the hot material by cutting around a metal template (33.8 mm×108 mm). In addition, strips were cut for use in filling the edge cavities of the mold. The total preform weight was adjusted to be in the range 84.0—86.0 grams.

d) Molding of plate-type electrolyte:

The plate-type electrolytes were formed by compression molding using a brass mold which was split in the plane of the plate along its centerline. The plate molds used had a cavity length and width dimensions (inner edge to inner edge) of about 128 mm and 67.1 mm respectively. The assembled mold had a flat surface cavity depth of about 1.65 mm. To prevent sticking of the binder/ceramic composition, it was necessary to spray the mold cavity surfaces with a fluorocarbon mold release agent (Cadco, Formula 61, sold by Cadilac Plastics and Chemical Company). Both halves of the mold were preheated to 137°C on the platens of an electrically heated hydraulic press (K-M Hydraulic Press, Model No. 3212). After the mold, halves had reached temperature, three rectangular preforms were stacked in the middle of one mold plate, (preferably bottom mold plate A of Figure 4) and four strips of material were placed in the edge recesses of the top mold plate and four strips were placed in the edge recesses of the bottom mold plate. The mold was then assembled, placed in the press and the platens closed sufficiently so that the platens just contacted both sides of the mold. Generally, for optimal molding, a force sufficient to produce flow of the material without inducing stresses in the material sufficient to crank the molded body. In general a force of from 4100 to 1200 lbs is adequate, generating a pressure of from 125 to 320 psi. The molding composition was preheated for 25 minutes with the stock temperature reaching 134°C. The force on the mold was then raised to 8000 lbs. and held for 5 minutes at which point the force was increased to 9500 lbs. for an additional 2.5 minutes, wherein excess material is forced out of the mold. After releasing the pressure, the mold was cooled to 25°C over a period of 3—4 hours. The mold was opened with the aid of set screws leaving the green body firmly attached to the bottom plate of the mold. The mold plate was then heated to 50°C to make the binder composition more flexible and aid in demolding. Demolding was accomplished with compressed air. The green bodies were then stored in sealed polyethylene bags until needed for burn out and sintering. These plates retain their shape during further processing.

Binder removal of molded, green plates was accomplished by partially embedding them in a packing powder having the same composition as the (broad particle size distribution) beta"-alumina precursor and placing in a furnace. The packing powder had the dual purposes of moderating temperature gradients and wicking condensable reaction products away from the plate surface. The furnace was heated at a rate of 12°C per hour to 500°C and then at a rate of 50°C/hour to 1050°C. The cooling of plate was carried out at the rate of 50°C per hour. Faster heating cycles could be used with furnaces having no thermal gradients.

After burn out of binder ingredients, each plate was placed in a closed, reusable platinum vessel for sintering. The vessel containing the plate was placed in an electrically heated furnace. The furnace was heated at a rate of 62°C per hour to 1590°C and held there for 25 minutes. Then the furnace was allowed to cool. The sintered plate-type electrolytes retained their shape during sintering. They have properties similar to properties of less complexly shaped beta"-alumina articles made by isostatic pressing and sintering.

Example 2

The procedures of Example 1 are repeated with the single difference that the composition of powdered beta"-alumina precursor is different. The powdered beta"-alumina precursor consists of 8.7% $Na_2O$, 0.70% $Li_2O$ and 90.6% Alumina. After mixing the ingredients, green bodies were prepared by compression molding.

Example 3

The procedures of Example 1 are repeated with the exception that the composition of powdered beta"-alumina precursor is different. The powdered beta"-alumina precursor contains 9.25% $Na_2O$, 0.25% $Li_2O$ and 90.5% $Al_2O_3$. Upon mixing the ingredients and molding the mix, green bodies were prepared.

Example 4

Moldable compositions were prepared by combining the following ingredients:

| Material | Amount, gram |
|---|---|
| Solprene 414C | 5.96 |
| Agerite Resin D | 0.53 |
| Sunoco Wax 3420 | 0.81 |
| Sunoco Wax 4412 | 0.81 |
| Styron 495 | 0.66 |
| Picco 6140-3 | 0.68 |
| Shellflex 371 | 1.58 |
| Flexricin P-4 | 0.94 |
| Powdered beta"-alumina precursor ($Na_2O$ 8.85%, $Li_2O$ 0.75% and $Al_2O_3$ 90.40%) | 50.00 |

This composition contained more elastomer (Solprene 414C) but lower levels of some of the other binder ingredients. After mixing, preforming and molding according to procedures of Example 1, green, tough plates resulted. These plates were processed further according to methods described in Example 1.

Example 5

Compositions containing higher levels of elastomer (Solprene 414C) were prepared by combining the following materials:

| Material | Amount, grams |
|---|---|
| Solprene 414C | 7.15 |
| Agerite Resin D | 0.27 |
| Sunoco Wax 3420 | 0.58 |
| Sunoco Wax 4412 | 0.81 |
| Styron 495 | 0.53 |
| Picco 6140-3 | 0.54 |
| Shellflex 371 | 1.14 |
| Flexricin P-4 | 0.94 |
| Powdered beta"-alumina precursor ($Na_2O$ 8.85%, $Li_2$ 0.75% and $Al_2O_3$ 90.40%) | 50.00 |

After mixing the ingredients according to procedure of Example 1, a tough, uniform sheet was formed. Following preforming the material was compression molded according to procedure of Example 1 but the flow characteristics were slightly inferior to those of material of Example 1.

Example 6

The following ingredients were combined as in Example 1 for preparing mixes with lower level of powdered beta"-alumina precursor:

| Material | Amount, grams |
|---|---|
| Solprene 414C | 5.17 |
| Agerite Resin D | 0.58 |
| Sunoco Wax 3420 | 1.25 |
| Sunoco Wax 4412 | 1.00 |
| Styron 495 | 0.72 |
| Picco 6140-3 | 0.73 |
| Flexon 845 | 0.59 |
| Shellflex 371 | 1.84 |
| Flexricin P-4 | 1.03 |
| Powdered beta"-alumina precursor ($Na_2O$ 8.85%, $Li_2O$ 0.75% and $Al_2O_3$ 90.40%) | 50.00 |

After mixing the various ingredients, flat sheets of material were made. These sheets were homogeneous and slightly softer than the material of Example 1. Upon preforming as in Example 1 the material was moldable.

Example 7

Compositions having higher level of powdered beta"-alumina precursor were prepared by combining the following amounts of ingredients:

| Material | Amount, grams |
|---|---|
| Solprene 414C | 4.40 |
| Agerite Resin D | 0.49 |
| Sunoco Wax 3420 | 1.06 |
| Sunoco Wax 4412 | 0.85 |
| Styron 495 | 0.61 |
| Picco 6140-3 | 0.63 |
| Flexon 845 | 0.49 |
| Shellflex 371 | 1.56 |
| Flexricin P-4 | 0.87 |
| Powdered beta"-alumina precursor ($Na_2O$ 8.85%, $Li_2O$ 0.75% and $Al_2O_3$ 90.40%) | 50.00 |

After mixing the ingredients, preforming the mix and compression molding it according to procedures of Example 1 the resulting plates had cracks, improper dimensions and voids. The improper dimensions and voids were due to incomplete closure of mold due to poor flow.

Example 8

Example 1 was repeated with the exception that the amount of Solprene was lowered and amounts of other binder ingredients were increased as follows:

| Material | Amount, grams |
|---|---|
| Solprene 414C | 4.80 |
| Agerite Resin D | 0.53 |
| Sunoco Wax 3420 | 1.15 |
| Sunoco Wax 4412 | 0.90 |
| Styron 495 | 0.70 |
| Picco 6140-3 | 0.70 |
| Flexon 845 | 0.54 |
| Shellflex 371 | 1.70 |
| Flexricin P-4 | 0.94 |
| Powdered beta"-alumina precursor ($Na_2O$ 8.85%, $Li_2O$ 0.75% and $Al_2O_3$ 90.40%) | 50.00 |

After mixing and preforming according to Example 1, the preforms were molded as in Example 1. After demolding, the plate had some minor defects.

Example 9

The procedure of Example 1 was repeated with the exception that a triangular preform was employed for compression molding of plates. The plate-type green bodies had cracks and deficient edges.

Example 10

The procedures of Examples 1—6 were repeated with these changes: A rectangular preform covering both the flat section of mold and outer channels was used for molding plates. These green bodies had deficient edges.

Example 11

The procedures of Examples 1—6 were repeated with this change: The force on mold during molding was 20,000 lbs. After demolding the plate, it had a large number of cracks.

Example 12

The procedure of Example 1 was repeated with the following change: The force on the mold during molding was 4000 lbs. The resulting plates had deficient edges.

Example 13

The procedure of Example 1 was repeated with the following exception: The powdered beta"-alumina precursor was prepared by using only Linde C alumina, soda and lithia. The molded plates had a couple of small cracks and edges were slightly deficient. The flow behavior of this composition was inferior to the material of Example 1.

Example 14

The procedure of Example 13 was repeated with the following changes: The powdered beta"-alumina precursor was prepared by using only Linde C alumina, soda and lithia. The powder contained also 1.5% water. The flow behavior of this composition was inferior to the flow of composition of Example 13. The molded plates had many cracks. The material was crumbling during preforming.

Example 15

The procedures of Examples 1—6 were repeated with the following change: Both of the mold surfaces were coated with another mold release agent (mold whiz 249, emulsified polymeric resin) in place of fluorocarbon (Cadco Formula 61). After molding, the plate had many cracks and could not be removed from mold. This release agent interacts with the plate and mold and changes the color of binder/ceramic material from gray to dark-brown.

Example 16

The procedures of Examples 1—6 were repeated with the following changes: Both mold surfaces were coated with Freekote 34 h (polymeric resin, non-silicone, manufactured by Frekote Inc.) in place of fluorocarbon (Cadco Formula 61). The film on the mold surfaces was discontinuous. Removal of plate from mold was difficult.

Example 17

The procedures of Examples 1—6 were repeated with the exception of molding temperature. The temperature of material during molding was 125°C. The flow of material was not equivalent to flow of material in Examples 1—6. The plates had some defects.

Example 18

The procedures of Examples 1—6 were repeated with the exception of molding temperature. The material was preheated for 1 hour and the temperature of material was 160°C during molding. The parts had small defects.

Example 19

Example 1 was repeated with the following exception: The material used for molding was aged for 15 days and then freshened on the mill for 5 minutes. After preforming it, sound plates were made by compression molding.

Example 20

Example 1 was repeated with the exception that the following ingredients were used at the specified amounts:

| Material | Amount, grams |
|---|---|
| Solprene 414C | 6.55 |
| Irganox 1010 | 0.30 |
| Irganox 1024 | 0.23 |
| Picco 6140-3 | 0.68 |
| Flexon 845 | 1.42 |
| Shellflex 371 | 1.80 |
| Flexricin P-4 | 0.80 |
| Powdered beta"-alumina precursor ($Na_2O$ 8.85%, $Li_2O$ 0.75% and $Al_2O_3$ 90.40%) | 50.00 |

After mixing and preforming, the material was used in compression molding. The molded plates had small cracks.

In the above Examples 1—20, Solprene 414C is a thermoplastic elastomer manufactured by Phillips Petroleum. It is a radial block copolymer of styrene and butadiene with a molecular weight ($\overline{M}_w$) of about 160,000. The 414C has a specific gravity of 0.95, melt flow of 72 (grams/10 min. at 190°C and apparent viscosity of 46,000 poise at 10 seconds$^{-1}$ at room temperature. Agerite Resin D is an antioxidant available from Vanderbilt Company; it is a polymerized 1,2 - dihydro - 2,2,4 - trimethyl quinoline. Typical properties of Agerite Resin D are specific gravity=1.06; softening point +74°C; and very soluble in acetone. Sunoco Wax 3420 is a paraffinic wax that melts at 137°F. Specific gravity at 60°F ia 1.2 g/cc and kinematic viscosity is 3.6 centistokes at 210°F. Sunoco Wax 4412 is a paraffinic wax that melts at 145°F. Specific gravity is 0.925 at 60°F and kinematic viscosity at 210°F is 4.2 centistokes. Styron 495 is a polystyrene available from Dow Chemical Company; it has a vicat softening point of 207°F, melt flow rate of 3.5 grams/10 min. and specific gravity of 1.05 at 60°F. Styron 495 has a molecular weight ($\overline{M}_w$) of about 250,000. Picco 6140-3 is a polyindene available from Hercules; its melt viscosity is 10 poises at 205°C. The softening point is 140°C and density 1.07 at 25°C. Flexon 845 is a paraffinic petroleum oil from Exxon Chemical Company. Flexon 845 has a viscosity of 230 SUS at 210°F and Aniline Point is 242°F. Shellflex 371 is a paraffinic-naphthenic oil available from Shell Oil Company. Shellflex has a specific gravity of 0.897 at 60°F; it has 49% paraffinic carbon, 50% naphthenic carbon and 1% aromatic carbon. The molecular weight is 400, viscosity at 100°G id 535 S.U.S., and Aniline Point is 212°F. Flexricin P-4 is methyl acetyl ricinoleate if specific gravity is 0.936 and boiling point at 2 mm is 185°C. Its molecular weight is 346. Irganox 1010 and Irganox 1024 are antioxidants manufactured by Ciba-Geigy.

Referring now to Figures 5 and 6, moldable compositions of this invention may be formed into tubular green bodies, which after sintering are similar or better than those produced by isostatic pressing. Each of the components of the mixture and processing steps are hereinafter described in greater detail.

The tubes were extruded using a ram type extrusion apparatus as shown in Figure 5. The die is assembled in the extruder A as indicated in detail in Figure 6. The die consists of two parts, the inner die part 1 which fits into the outer die part 2. The inner die part is securely centrally positioned within the outer die part by means of the three positioning screws 3. As the mixture passes the positioning screws, it will separate into strips. Therefore, the die must have sufficient length after these screws, in order that the strips of material "knit" into a smooth, sound tube. Too short a die, after the screws, will result in extrusion of strips of material, while too long a die will require excessive pressure to perform the extrusion. It has been found that a ratio of this die length, after the screws, to the wall thickness of the tubes extruded must be greater than 5. A ratio of 61 is suitable for the 7 mm OD, 4 micrometer wall thickenss, and a ratio of 12 is suitable for use with tubes whose diameter is 12 millimeters O.D. 1000 micrometers wall thickness, or larger.

The die is mounted a short distance up into the barrel 4 of the extruder by means of ring 5, which is affixed to the extruder with four screws 6. The bottom of the inner die part has a threaded opening 7 used to affix the mandrel 8, which has a set screw affixed at each end. The extruder and die are heated by means of the extruder heater 10 and the block heater 11 (Figure 5) surrounding the lower portion of the die.

The beta"-alumina precursor particulate is mixed with the binder ingredients on a roll mill, after which the milled sheet is cut or broken into pieces whose size allow convenient insertion into the extruder barrel. This material is then pressed into the extruder barrel, which has generally been preheated. The material is then heated to the desired temperature, that which is found most suitable for producing tubing of good quality from the particular composition and material being extruded. In one preferred embodiment of this invention, wherein the beta"-alumina precursor particulate consists essentially of 8.85 weight percent in $Na_2O$, 0.75 weight percent $Li_2O$ and 90.4 weight percent $Al_2O_3$, the preferred temperature of the mixture during extrusion is between about 135°—150°C, and most preferably between about 137°—145°C. The temperature at various places on the surface of the extruder housing and block heater as well as the low portion of the die set is monitored by means of a digital thermometer.

Ram 12 is then forced against the composition in the barrel to extrude tubing from the die orifice. The rate at which the tube is extruded and the temperature of the barrel and die are adjusted until a smooth tube is obtained. The tube is extruded over a mandrel 8 which has been affixed to the bottom of the inner die part by means of a screw 13, generally after the material has come to processing temperature. The mandrel is used to maintain straight tubing while the green body is still hot enough to deform easily. The diameter of the mandrel is slightly smaller than the diameter of the bottom portion of the inner die part. After a sufficient length of tubing has been extruded, it is cut from the die and placed upon another mandrel for cooling to room temperature. After reaching ambient temperature, the tubing can be easily handled, and stored without the use of a mandrel. If the top end of the mandrel has become hot during processing, prior to another extrusion, it can be unscrewed and then the cooler opposite end attached to the die end. Similarly, during binder burnout, it has been found advantageous to support the tubes in a vertical position by slipping them over a mandrel whose diameter is small enough to allow shrinkage of the tube during binder removal. These tubes may be held in a desiccator until ready for sintering.

The sacrificial binders of the composition used in this method of the invention are similar to that described in detail above, with the further addition of a fatty acid ester processing aid.

The process aid comprising esters of fatty acids are preferably selected from acetyl ricinoleate esters, which are single and double esters of ricinoleic acid. Their presence serves as an effective processing aid, acting as an anti-stick agent during calendering and extruding. The acetyl ricinoleate esters are also useful in wetting and dispersing the ceramic particulate so as to form a homogeneous mixture. The most useful type of this plasticizer processing aid for the subject invention is the Flexricin plasticizer, such as Flexricin P-4, methyl acetyl ricinoleate, and Flexricin P-6, butyl acetyl ricinoleate.

In this particulate binder mixture, the weight of the thermoplastic block copolymer is greater than the weight of the oil and wax combined, and greater than the weight of the stiffening polymers combined. The weight of the block copolymer is also greater than two times the weight of the oil, the wax, the first stiffening polymer, the second stiffening polymer or the processing aid alone.

Additional process aids to the fatty acid ester process aids may also be used. Examples of such additional aids have been described previously.

The powdered beta"-alumina precursor particulate most useful in the practice of this method of the invention has a particle size distribution of about 0.1—800 microns, with a preferred average particle size of greater than 3.5 microns and a most preferred particle size between about 3.5—20 microns. Additionally it is most preferred that the percentage of particles with diameters over 100 microns be less than 1.7 percent. The preferred beta"-alumina precursor particulate is prepared by combining sodium carbonate, lithium nitrate and alpha-alumina (Linde C), in such proportions that the final product has a composition of (a) 8.7% soda/0.7% lithia/94.6% alumina, or (b) 8.85% soda/0.75% lithia/90.4% alumina, or (c) 9.25% soda/0.25% lithia/90.5% alumina, or (d) 9.0% soda/0.80% lithia/90.2% alumina all percentages by weight. Composition (b) containing 8.85% soda/0.75% lithia/90.4% alumina (Linde C) was found to be the most suitable for preparing tubes continuously and repeatedly, without impurities and imperfections. Because the

extrudates prepared from the higher soda compositions (9.0, 9.25%) were stiffer than those of (b), defects and impurities due to the high pressure required for the extrusion of the material were often found. In contrast, extrudates having a lower soda content 8.7%, as compared to (b), often split during extrusion and had rippled surfaces. However, it was found that each composition could be fabricated with minor processing variations, into tubes having satisfactory properties. Therefore, while particulate composition ratio (b) is most preferred, other less suitable ratios of soda/lithia/alumina can be used in practicing the method of this invention.

The weight proportion of binder to precursor particulate solids of beta''-alumina may vary widely but is preferably as high as possible for dense bodies. Normally, the weight ratios of binder to beta''-alumina precursor particulate will be about 1:2 to 1:7, preferably for very dense bodies between about 1:4 to 1:6.

Note that in order that the ceramic binder composition of this invention be homogeneous and extrudable into tubes suitable for use, as for example, in the sodium sulfur battery, the components have to be combined in a particular order. The proper order of addition of components (including optional components) is: elastomer, antioxidant, beta''-alumina precursor particulate, waxes, stiffening agents, oils and processing aids. Reversing the order of addition of the waxes and stiffening agents results in compositions that can not be extruded. Reversing the order of additional oils and stiffening agents has the same effect. In selecting the optimum composition of the mixture to be extruded, careful tailoring of the die and the viscosity of the mixture to be extruded is required for preparation of good tubing. The apparent viscosity of the material should be high enough to develop the back pressure needed for knitting of the strips to form a tube. At too low an apparent viscosity, strips are extruded. Of course, if viscosity is too high, excessive pressure will be required to perform the extrusion.

For the preferred particulate ceramic binder composition of the invention, it is preferable to extrude the tubing within three days after mixing the binder-ceramic composition. It was found that the quality of the extrudate deteriorates as a function of time after mixing and also that more force is required to extrude the material. Additionally, although the mixture can be re-extruded, quality of the extrudate lessens with each subsequent extrusion. It is therefore suggested that a maximum of two extrusions be used in the preparation of the tubing.

At extrusion temperatures, the "life" of the mixture in the barrel is approximately 1 hour. This will be slightly longer or shorter depending on the time that has elapsed since the material is mixed and the quality of the tube needed.

Tubes produced by the process of this invention after burn out and sintering, were shown to have properties similar to those of tubes prepared by isostatic pressing and sintering. As a final test of membrane durability, a tube was extruded from the preferred beta''-alumina precursor particulate binder composition after which it was subjected to binder burn out and sintering. One end of the tube was closed with a sodium borosilicate glass and the other end was joined with an alpha-alumina tube with glass. The tube was tested on a helium leak detector and found to have a leak rate of less than $3\times10^{-9}$ cc/cm$^2$/sec.

This membrane was built into a device which allowed the tube to be filled with sodium and immersed in a vessel full of sodium. A sodium/ion current could then be passed through the beta''-alumina membrane under the influence of an applied potential. Current densities to 1000 Ma/cm$^2$ will pass through the membrane without damage at a temperature of 300°C. The resistivity of the membrane was approximately 5 ohm cm (0.15 ohm/cm$^2$) at 300°C and approximately 24 ohm cm (0.72 ohm-cm$^2$) at 150°C. The device was operated continuously at a current density of 500 Ma/cm$^2$ for a period of thirty days at a temperature of 300°C. At the end of that period there was no indication of damage.

The following examples illustrate the extrusion method of the invention.

Example 21

Circular tubes were prepared by extrusion of binder beta"-alumina precursor compositions. These compositions were prepared by combining the following ingredients:

| Material | Amount, grams |
|---|---|
| Solprene 414 | 4.80 |
| Agerite Resin D | 0.53 |
| Sunoco Wax 3420 | 1.15 |
| Sunoco Wax 4412 | 0.90 |
| Styron 495 | 0.70 |
| Picco 6140-3 | 0.70 |
| Flexon 845 | 0.54 |
| Shellflex 371 | 1.70 |
| Flexricin P-4 | 0.94 |
| Powdered beta"-alumina precursor ($Na_2O$ 8.85%, $Li_2O$ 0.75%, $Al_2O_3$ 90.4%) | 50.00 |

(a) Preparation of powdered beta"-alumina precursor

Dried samples of sodium carbonate, lithium nitrate and Linde C alumina (1 micrometer) were combined and milled for one hour in a polyethylene container using high purity alumina balls. The ratio of reagents was as follows: $Na_2O$ 8.85%, $Li_2O$ 0.75% and Linde C alumina 90.4%. The powder mix was calcined for 2 hours at 1260°C in platinum crucibles. On cooling, the powder was crushed and milled for 1 hour in polyethylene vessels using alumina balls. X-ray diffraction indicated that the powders were primarily $\beta$-$Al_2O_3$ and $Na_2O$—$Al_2O_3$ with smaller amounts of beta"-alumina and traces of $\alpha$-$Al_2O_3$. Scanning Electron Microscopy indicated that the milling operation effectively broke down the loosely bonded agglomerates formed during calcination leaving irregularly shaped porous particles. The following typical particle size distributions were found in two different samples of powdered beta"-alumina percursor as prepared in (a)

| Particle diameter | Wt. % | Wt. % |
|---|---|---|
| Below 6.35 Microns | 6.17 | 4.85 |
| 6.35 — 8.00 " | 11.15 | 12.77 |
| 8.00 — 10.08 " | 10.68 | 11.95 |
| 10.08 — 12.70 " | 12.40 | 13.08 |
| 12.70 — 16.00 " | 13.87 | 13.72 |
| 16.00 — 20.20 " | 14.75 | 13.48 |
| 20.20 — 25.40 " | 14.18 | 11.35 |
| 25.40 — 32.00 " | 9.62 | 9.00 |
| 32.00 — 40.30 " | 3.83 | 4.37 |
| 40.30 — 50.80 " | 0.75 | 1.60 |
| 50.80 — 64.00 " | 0.32 | 0.68 |
| 64.00 — 80.60 " | 0.60 | 0.45 |
| 80.60 —101.60 " | 0.53 | 0.70 |
| Above 101.60 " | 1.15 | 1.00 |
| Median Particle Size | 15 Microns | 14 Microns |

(b) Mixing of beta"-alumina precursor with the binder ingredients

Mixing of binder composition is carried out on a 80×180 mm two-roll vented research mill. The mill rolls were electrically heated with individual heat controls and chrome coated. The mill speed was 3.2 m per minute and had a friction ratio of 1.4 to 1. The gap between the rolls varied from 0.17 to 0.76 mm during mixing. The temperature of both rolls was set at 310°F and allowed to stabilize.

The order of addition of binder ingredients and specific conditions used in the mixing steps are listed below:

1. Set roll gap at 0.17 mm and add thermoplastic elastomer (Solprene 414). As soon as a Solprene 414 melt is formed on the rolls, add 5% by wt. of beta"-alumina precursor and the Agerite resin D.
2. Subsequent keep opening the mill rolls and adding the rest of the beta"-alumina precursor. The gap between the two rolls should be 0.70—0.76 mm at the completion of addition of beta"-alumina precursor.
3. Add petroleum waxes slowly (Sunoco Wax 3420 and 4412). The powdery material falling off the mill rolls is placed on mill rolls continuously. The banded material at edges of rolls is cut with sharp knife and placed on center of rolls repeatedly. The temperature of rolls is raised to 320°F for the next step.
4. Then polystyrene (Styron 495) and polyindene resin (Picco-6140-3) are added to the mix in that order. The mix is still crumbling at this stage. The banded material at edges of rolls is cut continuously and placed in center of rolls until completion of mixing.
5. The addition of Flexon 845 and Shellflex 371 follows with cutting of material at edges of rolls and returning the cut and crumbled material to the middle of rolls.
6. Flexricin P-4 is incorporated to the mix slightly slower than the other two oils. The temperature of rolls is brought to 280°F before initiation of addition of Flexricin P-4.
7. Upon completion of addition of all the ingredients, the mix is cut at edges of rolls and sliced in middle of rolls for 5 minutes. The cut material is returned to the center of rolls.
8. Mixing is completed within 40—45 minutes.
9. The mill is set at a speed of 1.5 m/per minute and the mix is sliced off the mill and transferred to the extrusion set-up.
10. Total weight of mixed material is 62.0 gms.

At the completion of mixing cycle, the binder composition is homogeneous. This is indicated by breaking a small piece of tape and examining its consistency.

(c) Extrusion of tubes

Circular tubes with approximately 12 mm diameter and a wall thickness of 1000 μm were extruded with a ram type extrusion apparatus. To perform the extrusion, the binder-ceramic composition is broken or cut

into a size convenient for insertion into the barrel of the extruder. After insertion into the preheated extruder barrel, the ram is inserted and a force of approximately 250 kg to 500 kg is applied to pack the material. At this point, the ram is stopped and force allowed to decay as the material is preheated for about 15 minutes prior to extrusion. After the preheat, the ram is forced against the material until tubes extrude from the die orifice. The rate at which tube is extruded and the temperature of barrel and die (137—145°C) are adjusted until a smooth tube is obtained. The extrusion rate is about 600 mm/minute. In order to maintain straight tubing while it is hot enough to deform, the tube is extruded over a mandrel of 10.5 mm diameter. Straight, stiff tubing was obtained. The inside and outside surfaces were very smooth.

(d) Binder removal and sintering of tubes

Binder removal is accomplished by heating the tubes in a circulating oven (Temperite, Type MU 182424A) using filtered air as the atmosphere. The current typical binder burn-out schedule is listed below. It has been found to be advantageous to support the tubes in a vertical position by slipping them over an alumina mandrel whose diameter is small enough to allow for shrinkage of the tube during binder removal. The tubes were removed from the burn-out oven and placed immediately in a desiccator which had been preheated to 65°C. Tubes and desiccator are allowed to cool to room temperature and the tubes are held in the desiccator until needed for sintering.

Typical binder burn-out schedules

| Temperature range °C | Rate °C/hour |
|---|---|
| 25—150 | 23 |
| 150—600 | 9.7 |
| 600 | hold for 4 hours |
| 600—150 | 52 |
| 150 | hold for 7.3 hours |
| 150—65 | allow oven to cool at its own rate |

After binder burn out tubes were encapsulated in platinum cylinders to prevent the loss of $Na_2O$ and arranged in vertical positions to avoid elliptical distortion, the cold furnace was slowly heated to 1585°C, held for one hour, then allowed to cool to room temperature. This technique was effective in sintering tubes having walls 400 μm and 1000 μm thick. However, when membranes having 140 μm walls were sintered, enough $Na_2O$ was lost from the small volume of the material in establishing an equilibrium vapor pressure within the platinum tube to prevent sintering to high densities. This problem was solved by placing partially sintered pellets of beta''-alumina in the platinum tubes with the thin membranes. Membranes having walls of 700 μm, 300 μm and 140 μm were all sintered to densities greater than 98% of theoretical.

Example 22

Example 21 was repeated with the exception that the tubes had diameter (O.D.) of approximately 7 mm and wall thickness of 400 μm. The technique for extruding this size differed primarily in the dimensions of die set and attached mandrel. Tubes with smooth surfaces were extruded.

Example 23

Example 21 was repeated with the exception that the tubes had diameters (O.D.) of approximately 1.8, 4.0 and 6.2 cm and wall thickness of 1—3 mm respectively. Tubes with these dimensions were prepared by changing the dimensions of the die set and attached mandrel. Tubes with good appearance and properties were prepared. They had properties equivalent to those tubes made by isostatic processing.

Example 24

A binder beta"-alumina precursor composition was prepared by combining the following ingredients:

| Material | Amount, grams |
|---|---|
| Solprene 414 | 4.50 |
| Agerite Resin D | 0.53 |
| Sunoco Wax 3420 | 3.93 |
| Flexon .845 | 2.37 |
| Flexricin P-4 | 0.95 |
| beta"-alumina precursor ($Na_2O$ 8.85% $Li_2O$ 0.75%, alumina 90.4%) | 50.00 |

The ingredients were mixed and extruded according to Example 22. Tubes with a diameter of 12 mm and wall thickness of 1000 μm were extruded. These tubes were softer than the tubes of Example 1. The inside and outside surfaces were good.

Example 25

A binder-ceramic composition was obtained by combining the following ingredients:

| Material | Amount, grams |
|---|---|
| Solprene 414 | 8.4 |
| Styron 475 | 1.3 |
| Sunoco Wax 4412 | 1.2 |
| Flexricin P-4 | 0.6 |
| Agerite resin D | 0.7 |
| beta"-alumina precursor ($Na_2O$ 8.85%, $Li_2O$ 0.75%, alumina 90.4% | 50.00 |

The ingredients were mixed and extruded according to procedures of Example 22. Tubes with a diameter of approximately 18 mm and wall thickness of 1000 μm were extruded. These tubes were very stiff and had tougher surface. The surface contained metal contamination resulting from high shearing of material against the surface of extrusion barrel.

Example 26

Example 21 was repeated with the exception that the composition of beta"-alumina precursor was as follows: $Na_2O$ 9.0%, $Li_2O$ 0.80% and alumina 90.20%. The components were mixed according to procedure of Example 1. The mix was homogeneous and stiff. In order to extrude tubes, the application of higher forces on the extrusion form was required and extrusion was not continuous because of splitting of tubing. Extrusion attempts were made at a temperature range of 130—170°C.

Example 27

The procedures of Example 21 were repeated with the exception of composition of beta"-alumina precursor. The powdered precursor contained $Na_2O$ 8.7%, $Li_2O$ 0.7% and alumina 90.6% and prepared according to procedure of Example 21. The mix was softer and could be extruded at a lower temperature range (90—110°C).

The surface of these tubes was inferior to those of Example 1, 2 and 3. Attempts to extrude at higher temperatures (110—170°C) resulted in split tubes.

Example 28

The procedure of Examples 21, 22 and 23 were repeated with the only exception that the amount of flexricin P-4 was increased to 1.2 grams. The homogeneous mixes were softer and upon extrusion resulted in tubes with smoother surfaces.

Example 29

The procedures of Example 21, 22 and 23 were repeated with the exception of mixing procedure. The ingredients were placed on roll mill very quickly and in no particular order. The extrusion was not continuous and the tubes had defects.

Example 30

The procedures of Examples 21, 22 and 23 were repeated with the exception that the volume percent of powdered beta"-alumina precursor was raised to 57% by volume. Processing of mixture was not as good as that of Examples 1, 2 and 3.

Example 31

The volume fraction of powdered beta"-alumina precursor in Examples 21, 22 and 23 was reduced to 53% by volume and the volume fraction of binder ingredients was raised to 47% of total mix. Upon repeating the procedures of Examples 21, 22 and 23, the mix was extruded and resulted in good circular tubes.

Example 32

The materials of Examples 21, 22 and 23 were mixed according to procedure of Example 21 and stored for 20 days of storage, the mixes were not extruded. Upon remixing these compositions, circular tubes were extruded.

Example 33

The following ingredients were combined for preparing binder-ceramic compositions.

| Material | Amount, grams |
|---|---|
| Solprene 414 | 7.75 |
| Agerite Resin D | 0.85 |
| Sunoco Wax 3420 | 3.31 |
| Styron 495 | 2.26 |
| Flexon 845 | 3.91 |
| Flexricin P-4 | 1.22 |
| beta"-alumina precursor ($Na_2O$ 8.85% $Li_2O$ 0.75%, alumina 90.4%) | 80.70 |

The above ingredients were mixed as in Example 21. Extrusion of mixes and binder removal were difficult.

Example 34

The following ingredients were combined for preparing binder-ceramic compositions.

| Material | Amount, grams |
|---|---|
| Solprene 414 | 6.55 |
| Agerite Resin D | 0.53 |
| Picco 6140-3 | 0.68 |
| Shellflex 371 | 1.80 |
| Flexricin P-4 | 0.94 |
| beta"-alumina precursor $Na_2O$ 8.85% $LiO_2$ 0.75% alumina 90.4% | 50.00 |

The above materials were mixed as in Example 21. The tubes had defects.

Example 35

The following ingredients were combined as in Example 21:

| Material | Amount, grams |
|---|---|
| Solprene 414 | 6.55 |
| Agerite Resin D | 0.53 |
| Picco 6140-3 | 0.68 |
| Flexricin P-4 | 4.16 |
| beta"-alumina precursor ($Na_2O$ 8.85% $Li_2O$ 0.75%, alumina 90.4%) | 50.00 |

Upon completion of mixing, the mix was soft and difficult to process.

Example 36

The procedures of Examples 21, 22 and 23 were repeated, however, with the exception that the following composition of beta"-alumina precursor was used. Two different batches of beta"-alumina precursor were prepared (each batch $Na_2O$ 8.85%, $Li_2O$ 0.75% and alumina 94.4%) and then blended. One batch was prepared using Linde C alumina, average particle size one micrometer, and the other was made using Alcoa XA-16-SG, a ground alpha-alumina powder having a wide distribution of particle sizes ranging from about 40 micrometers to less than 1 micrometer. The powders were calcined for 2 hours at 1260°C in platinum crucibles. On cooling, the powders were individually crushed and milled for 1 hour in polyethylene vessels using alumina balls. The two powders were combined in equal parts in a plastic container containing alumina balls and shaken together for 30 minutes on a paint shaker. After mixing, these compositions were extruded (extrusion barrel and die temperature 125—130°C). The surface of tubes was very rough. The tubes were defective at the knitline and unsuitable for end capping.

Example 37

The procedures of Examples 21, 22 and 23 were repeated with the exception that the temperature of extrusion barrel and die set were 170°C. The extruded green bodies had defects.

Example 38

The procedures of Examples 21, 22 and 23 were repeated with the exception that the extrusion was carried out at 125°C. The green body was splitting during extrusion.

Example 39

The procedures of Examples 21, 22 and 23 were repeated with the exception that no metal rod (mandrel) was attached to the die. The tubes did not have good dimensional precision.

Example 40

The procedures of Example 21 were repeated with the exception that the volume percent of powdered B"-alumina precursor was 45%. The sintered tubes had lower density than those of Example 21.

Example 41

The following ingredients were mixed according to Example 1.

| Material | Amount, grams |
|---|---|
| Kraton 1101 | 4.73 |
| Sunoco Wax 4412 | 2.31 |
| Flexon 845 | 2.16 |
| Flexricin P-4 | 1.79 |
| Agerite Resin B | 0.67 |
| beta"-alumina precursor ($Na_2O$ 8.85% $Li_2O$ 0.75%, alumina 90.4%) | 50.00 |

The mix was extruded as in Example 21. The resulting tubing had small defects.

In the above Examples 21—40, Solprene 414C is a thermoplastic elastomer manufactured by Phillips Petroleum. It is a radial block copolymer of styrene and butadiene with a molecular weight (Mw) of about 160,000. The 414C has a specific gravity of 0.95, melt flow of 72 (grams/10 min. at 190°C and apparent viscosity of 46,000 poise at 10 sec.$^{-1}$ at room temperature. Agerite Resin D is an antioxidant available from Vanderbilt Company; it is a polymerized 1,2 - dihydro - 2,2,4 - trimethyl quinoline. Typical properties of Agerite Resin D are specific gravity=1.06; softening point +74°C; and very soluble in acetone. Sunoco Wax 3420 is a paraffinic wax that melts at 58°C. Specific gravity at 15°C is 1.2 g/cc and kinematic viscosity is 3.6 centistokes at 99°C. Sunoco Wax 4412 is a paraffinic wax that melts at 145°F. Specific gravity is 0.925 at 15°C and kinematic viscosity at 90°C is 4.2 centistokes. Styron 495 is a polystyrene available from Dow Chemical Company; it has a vicat softening point of 97°C, melt flow rate of 3.5 grams/10 min. and specific gravity of 1.05 at 15°C. Styron 495 has a molecular weight (Mw) of about 250,000. Picco 6140-3 is a polyindene available from Hercules; its melt viscosity is 10 poises at 205°C. The softening point is 140°C and density 1.07 at 25°C. Flexon 845 is a paraffinic petroleum oil from Exxon Chemical Company. Flexon 845 has a viscosity of 230 SUS at 99°C and Aniline Point is 117°C. Shellflex 371 is a paraffinic-naphthenic oil available from Shell Oil Company. Shellflex has a specific gravity of 0.897 at 15°C; it has 49% paraffinic carbon, 50% naphthenic carbon and 1% aromatic carbon. The molecular weight is 400, viscosity at 38°C is 427 S.U.S., and Aniline Point is 100°C. Flexricin P-4 is methyl acetyl ricinoleate. Its specific gravity is 0.936 and boiling point at 2 mm is 185°C. Its molecular weight is 346.

Referring now to Figures 7 and 8, the composition of the invention may be used to form end-capped tubular green bodies.

The tubular green bodies which can be end-capped by the method of this invention may be formed by either compression or extrusion molding. However, they are preferably prepared by the extrusion molding process described above. The green bodies can be end-capped by the ultrasonic method of the subject invention. End-capping should be done as soon after extrusion of the tubing as is practical, preferable within two weeks. End-capping by ultrasonic bonding or ultrasonic forming can be performed by means of the ultrasonic welder, Branson Model 400C shown in Figure 7. Figure 8 illustrates in detail the horn and mandrel of Figure 7 as well as the tube placement. In end-capping by either bonding or forming, a tube 1 which has been carefully cut to give a smooth surface whose face 2 is perpendicular to the length of the tube is placed over the mandrel 3. The mandrel as well as the ultrasonic horn 4 preferably have hemispherically shaped ends 5 and 6 respectively. In ultrasonic bonding, an end-cap may be formed by stamping or cutting a disc from a sheet of material having the same composition and approximate thickness as that of the tube walls. This end-cap also preferably has a hemispherical shape. This end cap is then placed centrally up into the ultrasonic horn or preferably on top of the mandrel. The horn is then brought down over the mandrel and pressure and ultrasonic vibrations are applied to weld the joining surfaces. In ultrasonic forming, a tube like that above is placed over the mandrel. The ultrasonic horn is then brought down over the tube to contact the tube while ultrasonic vibrations are applied, thus forming the tube into an end cap. Ultrasonic vibrations and pressure are applied to weld the joining surfaces. In both the bonding and forming end-capping process, it is preferable to rotate the tube during the process.

In the subject invention, circular high gain horns are preferably used. The crown section of the horn is of size of the tubular green body used. Ultrasonic end capping as taught in this application is generally performed on green body tubes which have a wall thickness of 3 mm or less, however, tubes having a wall thickness greater than 3 mm may also be end capped by the process of this invention. Ultrasonic welding of binder ceramic compositions as carried out in this invention is fast, clean and produces excellent joint integrity. This process causes minimum distortion and material degradation. After burn out and sintering, tube and end cap have densities 98% of theoretical and the line of demarcation between the end cap and the tube no longer exists. The interface between the tube and end cap now appears to have the same properties as the tube.

The preferred range of binder components, including optional components, are as described above for the extrusion process.

An especially preferred sacrificial binder has the following composition:—

| Component | (Binder 40—60 volume % of total) |
|---|---|
| Solprene 414C | 30—80 |
| Agerite Resin D | 0—6 |
| Sunoco Wax 3412<br>Sunoco Wax 4412 | 5—20 |
| Styron 495 | 2—10 |
| Picco 6140-3 | 2—10 |
| Flexon 845 | 4—30 |
| Shellflex 371 | 5—25 |
| Flexricin P-4 | 2—10 |

The powdered beta″-alumina precursor particulate useful in the practice of the method of this application has a particle size (diameter) distribution of between about 0.1—850 microns, with a preferred average particle size of greater than 3.5 microns, most preferably between about 3.5 microns. The preferred beta″-alumina precursor particulate is prepared by combining sodium carbonate, lithium nitrate and alpha-alumina (Linde C) in such amounts as to form a beta″-alumina precursor particulate composition which comprises 8.85% soda/0.75% lithia/90.40% alumina by weight.

The following examples illustrate the ultrasonic end-capping process of the invention.

Example 42

Tubes having 12 mm outside diameter were prepared by extrusion of a typical binder mixture containing the following ingredients. Their length was from 3—20 cm.

| Binder component | Wt. gms. | Wt. % | Volume % |
|---|---|---|---|
| Solprene 414C | 4.80 | 7.75 | 40% of Binder |
| Agerite Resin D | 0.53 | 0.85 | 4% ″ |
| Sunoco Wax 3420 | 1.15 | 1.86 | 10% ″ |
| Sunoco Wax 4412 | 0.90 | 1.45 | 8% ″ |
| Styron 495 | 0.70 | 1.13 | 5% ″ |
| Picco 6140-3 | 0.70 | 1.13 | 5% ″ |
| Flexon 845 | 0.54 | 0.87 | 5% ″ |
| Shellflex 371 | 1.70 | 2.74 | 15% ″ |
| Flexricin P-4 | 0.94 | 1.52 | 8% ″ |
| beta″-alumina precursor mix<br>(8.85% $Na_2O$, 0.75% $Li_2O$ and 90.40% $Al_2O_3$) | 50.00 | 80.70 | 55% of total |

a) The preparation of a powdered B″-alumina precursor:

Dried samples of $Na_2CO_3$ and $LiNO_3$ were mixed with Linde C $Al_2O_3$ and milled for one hour in a polyethylene container using high-purity $Al_2O_3$ balls. The ratio of reagents was chosen so that the final products would have compositions of 8.85% $Na_2O$—0.75% $Li_2O$—90.40% $Al_2O_3$ by weight. The powders were calcined for two hours at 1260°C in platinum crucibles. On cooling the powders were crushed and milled for one hour in polyethylene vessels using $Al_2O_3$ balls. X-Ray defraction indicated the composition of the milling operation effectively broke down the loosely bonded agglomerates formed during calcination.

Mixing of the binder composition is carried out on a 80×180 mm two-roll, vented research mill. The mill rolls were electrically heated with individual heat controls and chrome coated. The mill speed was 3.2 m per minute and had a friction ratio of 1.4 to 1. The gap between the rolls varied from 0.17 to 0.76 mm during mixing. The temperature of both rolls was set at 155°C and allowed to stabilize.

The order of addition of binder ingredients and specific conditions used in the mixing steps are listed below:

1. Set roll gap at 0.17 mm and add thermoplastic elastomer (Solprene 414). As soon as a Solprene 414 melt is formed on the rolls, add 5% by wt. of beta"-alumina precursor and the Agerite resin D.

2. Subsequently keep opening the mill rolls and adding the rest of the beta"-alumina precursor. The gap between the two rolls should be 0.70—0.76 mm at the completion of addition of beta"-alumina precursor.

3. Add petroleum waxes slowly (Sonoco wax 3420 and 4412). The powdery material falling off the mill rolls is placed on mill rolls continuously. The banded material at edges of rolls is cut with sharp knife and placed on center of rolls repeatedly. The temperature of rolls is raised to 160°C for the next step.

4. Then polystyrene (Styron 495) and polyindene resin (Picco-6140-3) are added to the mix in that order. The mix is still crumbling at this stage. The banded material at edges of rolls is cut continuously and placed in center of rolls until completion of mixing.

5. The addition of Flexon 845 and Shellflex 371 follows with cutting of material at edges of rolls and returning the cut and crumbled material to the middle of rolls.

6. Flexricin P-4 is incorporated to the mix slightly slower than the other two oils. The temperature of rolls is brought to 138°C before initiation of addition of Flexricin P-4.

7. Upon completion of addition of all the ingredients, the mix is cut at edges of rolls and sliced in middle of rolls for 5 minutes. The cut material is returned to the center of rolls.

8. Mixing is completed within 40—45 minutes.

9. The mill is set at a speed of 1.5 m/per and the mix is sliced off the mill and transferred to the extrusion set-up.

10. Total weight of mixed material is 62.0 gms.

At the completion of mixing cycle, the binder composition is homogeneous. This is indicated by breaking a small piece of tape and examining its consistency.

c) Extrusion

A ram type extrusion apparatus was to extrude the green body tubes. The techniques for extruding different sizes of tubes (diameter and wall thickness) differed primarily in the die set used for the extrusion.

To perform the extrusion, mixed binder and ceramic composition is broken or cut into a size convenient for insertion into the barrel of the extruder. After insertion into the preheated extruder barrel, the ram is inserted and a force of approximately 250 kg to 500 kg is applied to pack the composition. At this point the ram is stopped and the force allowed to decay as the composition is preheated for about 15 minutes prior to extrusion. After the preheat, the ram is once again forced against the composition until tube extrudes from the die orifice. The rate at which tube is extruded and the temperatures of the barrel and die are adjusted until a smooth tube is obtained. Typical extrusion rates are 600 mm/min for the 12 mm tube and 100 mm/min for the 7 mm tube. The tube is extruded over a mandrel of 10.5 mm diameter for the 12 mm tubing and 6.5 mm diameter for the 7 mm tubing. This is done to maintain straight tubing while the green body is still hot enough to deform easily. After a sufficient length of tubing has been extruded, it is cut from the die and placed on another mandrel for cooling to room temperature. After reaching ambient temperature, the tubing can be easily handled, cut and stored without use of a mandrel.

d) End-capping of the tubes

The shaped caps were obtained by placing the same binder mixture (as mixture used to extrude tubes) on an 80×180 mm two-roll mill. After the material was banded, the rolls were adjusted for obtaining binder sheets with a thickness of 1 mm. Circular disks were cut from the binder sheets with a disk diameter equal to the outside diameter of tube (12 mm). Hemispherically shaped caps were obtained by taking disks cut from the milled sheet and pressing these disks into a hemispherical teflon cavity (heated to 150°C). Using a brass or steel mandrel whose end has been shaped to give the device the hemispherical shape of the interior of the end-cap.

The apparatus used for ultrasonic end-capping was a Branson, Model 400C, Ultrasonic Welder. Using this ultrasonic welder, molded caps of a variety of shapes have been successfully bonded. A tube which has been carefully cut to give a smooth surface whose face is perpendicular to the length of the tube is placed over a mandrel. The horn of the ultrasonic welder (Branson, Model 400C, ultrasonic welder) has a tube shape with a hemispherical end cut into the base of the horn. The end-cap is then centrally placed on top of the mandrel. Alternately but less desirably, the end-cap is placed up into the horn and positioned with a solid rod having a flat end cut perpendicular to the length of the rod. The horn of the ultrasonic welder is then carefully brought down to give initial contact between the end-cap and the tube. Ultrasonic power is applied while the horn is lowered to its final position to produce the bond. The various horns used for end-capping different diameter (O.D.) and thickness tubes were tuned to between 19,950 and 20,000 Hz. Although not mandatory, a better success rate in producing helium leak tight end-capped tubes was achieved if the tubes were rotated during the ultrasonic bonding. Generally, a total time of 15 seconds from power on to power off was adequate. It has been found advantageous to apply ultrasonics for 3 to 5 seconds prior to applying pressure with the ultrasonic horn, after which the ultrasonics are applied for 5 to 15 seconds with this pressure. Pressure may be retained for 5 to 10 seconds after the ultrasonics are turned

off, in order to allow the end-capped tube to cool, and then the horn is raised to allow removal of the tube from the mandrel. For better ultrasonic end-capping, it was found necessary, in order to obtain better sealing, to use high amplitude vibrations. As a result, a black booster horn was attached between the converter and aluminum horn. This change resulted in increasing the amount of amplitude by 2.5 times at the face of horn. This increased amplitude was most suitable for end-capping.

Binder removal

Binder removal is accomplished by heating the tubes in a circulating oven (Temperite, Type MU 182424A) using filtered air as the atmosphere. It has been found to be advantageous to support the tubes in a vertical position by slipping them over an alumina mandrel whose diameter is small enough to allow for shrinkage of the tube during binder removal. The tubes were removed from the burn-out oven and placed immediately in a desiccator which has been preheated to 65°C. Tubes and desiccator are allowed to cool to room temperature and the tubes are held in the desiccator until needed for sintering. A typical burn-out schedule is found in the following table.

| Temperature range °C | Rate °C/hour |
|---|---|
| 25—150 | 23 |
| 150—600 | 9.7 |
| 600 | hold for 4 hours |
| 600—150 | 52 |
| 150 | hold for 7.3 hours |
| 150—65 | Allow oven to cool at its own rate |

f) Sintering

After binder burn out tubes were encapsulated in platinum cylinders and arranged in vertical positions in a cold furnace. The furnace was slowly heated to 1585°C, held for fifteen minutes, cooled to 1400°C, held for one hour, than allowed to cool to room temperature.

After burn out and sintering of end-capped tubes, it was found that they were hermetically sealed. Hermeticity was checked with a Veeco Model 12 helium leak detector. The resistivity and modulus of rupture of the sintered 10 mm O.D. tube were 4.6 ohm-cm at 300°C and 500 mn/cm$^2$ respectively. The efficiency of sound end-capped tubes was good. During burn out and sintering, tubes shrink by approximately 20%.

Example 43

The procedure of Example 42 was repeated with the exception that the hemispherically shaped cap was grinded with a brass screen so that complete contact between tube and cap was obtained before the application of ultrasonic vibrations. The efficiency of leak tight end-capped tubes was slightly increased. No flash was generated by the end-capping process.

Example 44

Example 42 was repeated with the exception that flat disks with a 12 mm diameter were used for the end-capping. Leak tight end-capped tubes were obtained. The efficiency of sound end-capped tubes were slightly lower because of misalignment of cap and tube.

Example 45

The procedure of Example 42 was repeated with the exception that the end-cap had a piston-like shape. It was prepared by compression molding of binder composition at 150°C. Half of this cap had a diameter equal to the inside diameter of tube and half had a diameter equal to the outside diameter of tube. Upon application of ultrasonics, end-capped tubes with good hermeticity and properties were obtained.

Example 46

Example 42 was repeated with the exception that a hemispherically shaped end-cap was prepared by compression molding. For higher efficiency of ultrasonically end-capped tubes, the joining of tube to cap should take place close to the end of hemispherical section. The ultrasonic intensity of horn is not as high in straight section as in hemispherical.

Example 47

Example 42 is repeated with the exception that a higher pressure is exerted on the part by the horn.

Upon application of over 100 lbs pressure on green tube, crack formation increases and efficiency at leak tight tubes decrease.

Example 48

The procedure of Example 42 is repeated with the exception that the area of cap to be attached to the tube is exposed to methylene chloride before application of ultrasonic vibrations. At the completion of welding the tube-cap interface is not visible. Thus the appearance of end-capped tubes was improved. These tubes were leak tight.

Example 49

Example 41 is repeated again with the exception that a larger diameter disk was used (15—17 mm). This size disk was chosen to avoid misalignment problems in end-capping but we run across the flash problem arising from larger diameter disks. Both of these problems were eliminated by heating the disk at 150°C, placing it over the tube, and lowering the horn for the application of ultrasonic vibrations. On lowering the horn, the hot disk was shaven off by horn to optimum diameter. The end-capped tubes were leak tight and had good appearance.

Example 50

Upon repeating Example 49, the larger diameter disk and tube were heated at 150°C before the application of ultrasonic vibrations. Upon welding the cap to the tube there was buckling of tube close to the interface.

Example 51

An 18 mm tube (outside diameter) was precision cut to a length of 10 cm as the 12 mm tube of Example 42. A disk with a diameter of 22 mm was stamped out from a milled sheet of binder material. After heating the disk at 150°C, it was placed on top of tube and horn was brought down to make contact with the parts. On lowering the horn, the cap was shaven off to suitable size for end-capping. Leak tight tubes were obtained after burn out and sintering.

Example 52

The procedure of Example 51 was repeated with the exception that the length of the 18 mm tube is 20 centimeters. A longer mandrel for supporting the tube was constructed for use in end-capping these longer tubes. Upon application of ultrasonic vibration the cap was attached to the tube. The hermeticity of tubes determined with the helium leak detector was good.

Example 53

The procedure of Example 52 was repeated with the exception that the thickness of disk was changed from 1.4 mm to 2 mm. Upon application of ultrasonic vibrations, sealed tubes were obtained with good hermeticity. The joint area was not as smooth as in tubes of Example 11.

Example 54

The procedure of Example 51 was repeated with the exception that the ultrasonic horn was coated with a teflon coating. The end-capped tubes had no aluminum film originating from aluminum horn. They were hermetically sealed.

Example 55

The procedure of Example 42 was repeated with the exception that Flexricin P-4 was increased from 0.94 gms to 1.17. On compounding this mixture, it was softer and was used for preparation of disks. The tubes were prepared by using the amounts of binder components of Example 1. Tubes with good hermeticity were obtained. The joint area was smooth. A softer cap and a stiffer tube were preferred.

Example 56

The volume fraction of beta"-alumina precursor powder in Example 42 was increased to 56% and the volume fraction of organic ingredients was reduced to 44% of total mix. The procedure of Example 1 was repeated and good end-capped tubes were obtained.

Example 57

The volume fraction of beta"-alumina precursor powder in Example 42 was reduced to 54% and the volume fraction of organic ingredients was increased to 46% of total mix. Upon repeating the procedure of Example 1, end-capped tubes with good hermeticity were obtained.

Example 58

Another binder mixture is prepared with the exception of reducing the amount of wax 3420 by 0.35 grams and incorporating 0.35 grams of Wingtack 95. Tubes (18 mm O.D.) and disks made from this mixture were used for end-capping as in Example 42. The strength of bond in these end-capped tubes was higher. Good end-capped tubes were obtained.

Example 59

Another binder mixture is prepared with the exception of reducing the amount of wax 3420 by 0.50 grams and incorporating 0.50 grams of Wingtack Plus. A homogeneous mixture was obtained after mixing ingredients. Good end-capped tubes were obtained from this mixture after it was aged for a month. The wingtack resins is particularly useful in situations involving delayed end-capping of the tubes.

Example 60

Tubes with an outside diameter of 7 mm and disks with 0.5 mm thickness were prepared from binder compound described in Examples 42. Upon ultrasonic end-capping the closed tubes bulged close to the joint area. This is due to the fact that thin wall tubes cannot take pressure as well as thicker tubes.

Example 61

The tubes and disks described in Example 60 were used again for end-capping. The tube was supported by placing a grass sleeve around the tube. Upon application of ultrasonic vibrations, the bulging on closed tubes was reduced.

Example 62

The procedure of Example 42 was repeated with the exception that the powder beta"-alumina precursor had the composition 8.7% $Na_2O$/0.7% $Li_2O$/90.6% $Al_2O_3$. The efficiency of the tubes was not as high as when using the composition of Example 1.

Example 63

The procedure of Example 42 was repeated with the exception that the powdered beta"-alumina precursor had the composition 9.0% $Na_2O$/0.8% $Li_2O$/90.2% $Al_2O_3$. The efficiency of the tubes was not as high as when using the composition of Example 1.

Example 64

The procedure of Example 49 is repeated with the exception that the larger disk is not heated before the application of ultrasonics. The closed tubes are rubbed with methylene chloride at interface to remove excessive flash. Efficiency is not as high as in Example 49.

Example 65

The procedure of Example 64 is repeated with the exception that methyl ethyl ketone is used for removal of excessive flash. The solvent is removed from tube interface very slowly. The efficiency of sound tubes is not as high as in cases where no solvent is used.

Example 66

Example 42 was repeated with the exception that ultrasonic forming was used for closing one end of the circular 12 mm outside diameter tube. A tube which has been carefully cut to give a smooth surface whose face is perpendicular to the length of the tube is placed over a mandrel. The horn of ultrasonic welder (Branson Model 400 C) which has a hemispherical cavity cut into the face of the horn is then carefully brought down to make contact with the end of tube. Ultrasonic power is applied while the black booster horn (high amplitude vibrations) is lowered to its final position for closing the tube. Ultrasonic forming uses no end-caps. Upon burn out of binder and sintering, the tube were formed to be hermetically sealed. As with ultrasonic bonding it was found advantageous to rotate the tubes during this process to form an even smooth shape.

Example 67

Example 66 was repeated with the exception that the outside diameter of tube is 25 mm. These tubes were ultrasonically formed. After burn out of binder and sintering, the tubes had good properties.

Example 68

Example 66 was repeated with the exception that the outside diameter of tube was 18 mm. The tubes were rotated during ultrasonic forming. The formed tubes had improved appearance.

In the above Examples 42—60, Solprene 414C is a thermoplastic elastomer manufactured by Phillips Petroleum. It is a radial block copolymer of styrene and butadiene with a molecular weight ($\overline{M}_w$) of about 160,000. The 414C has a specific gravity of 0.95, melt flow of 72 (grams/10 min. at 190°C and apparent viscosity of 46,000 poise at 10 sec.$^{-1}$ at room temperature. Agerite Resin D is an antioxidant available from Vanderbilt Company; it is a polymerized 1,2 - dihydro - 2,2,4 - trimethyl quinoline. Typical properties of Agerite Resin D are specific gravity=1.06; softening point +74°C; and very soluble in acetone Sunoco Wax 3420 is a paraffinic wax that melts at 58°C. Specific gravity at 150°C is 1.2 g/cc and kinematic viscosity is 3.6 centistokes at 99°C. Sunoco Wax 4412 is a paraffinic wax that melts at 63°C. Specific gravity is 0.925 at 60°C and kinematic viscosity at 99°C is 4.2 centistokes. Styron 495 is a polystyrene available from Dow Chemical Company; it has a vicat softening point of 97°C, melt flow rate of 3.5 grams/10 min. and specific gravity of 1.05 at 150°C. Styron 495 has a molecular weight ($\overline{M}_w$) of about 200,000. Picco 6140-3 is a polyindene

available from Hercules; its melt viscosity is 10 poises at 205°C. The softening point is 140°C and density 1.07 at 25°C. Flexon 845 is a paraffinic petroleum oil from Exxon Chemical Company. Flexon 845 has a viscosity of 230 SUS at 99°C and ASniline Point is 117°C. Shellflex 371 is a paraffinic-napthenic oil available from Shell Oil Company. Shellflex has a specific gravity of 0.897 at 150°C; it has 49% paraffinic carbon, 50% naphthenic carbon and 1% aromatic carbon. The molecular weight is 400, viscosity at 38°C is 427 SUS., and Aniline Point is 100°C. Flexricin P-4 is methyl acetyl ricinoleate. Its specific gravity is 0.936 and boiling point at 2 mm is 185°C. Its molecular weight is 346. Wingtack Plus are resins available from Goodyear Chemical Company. Wingtack 95, considered a synthetic polyterpene, has a softening point of 100°C. Specific gravity at 25°C is 0.93 and molecular weight of 1200. Wingtack Plus, a polyterpene resin has a softening point of 94°C, specific gravity of 0.93 and molecular weight of 1100.

**Claims**

1. A moldable composition comprising a mixture of from 40 to 60 volume percent of sinterable beta"-alumina particulate solids and from 60 to 40 volume percent of organic sacrificial binder characterised in that the sacrificial binder comprises:—

(a) a thermoplastic block copolymer selected from the group consisting of linear, radial and linear and radial block copolymers, said block copolymers having a first aromatic block which is glassy or crystalline at 20—25°C, and which has a softening point of from 80 to 250°C and a second aliphatic block which is different from said first block and behaves as an elastomer at temperatures of from 15°C below and 100°C above said softening point of said first block;

(b) at least one oil at least 75 percent by weight of which boils in a range of from 285 to 560°C, and which has a viscosity of from 30 to 220 Saybolt Universal Seconds (SUS) at 100°C and an Aniline Point in a range of from 75 to 125°C;

(c) at least one wax melting at a temperature of from 55°C to 80°C, and at least 75 percent by weight of which boils at temperatures in a range of from 315°C to 490°C;

(d) at least one first stiffening thermoplastic polymer which is glassy or crystalline at 20—25°C and which has a softening point between about 80—250°C and comprises aromatic monomeric units associable with block copolymer (a); and

(e) at least one second stiffening thermoplastic polymer, different from said first polymer and which is glassy or crystalline at 20°—25°C, and which has a softening point between about 80—250°C and comprises aromatic monomeric units associable with block copolymer (a), the weight of (a) being greater than the weights (b) and (c) combined, greater than the weights of (d) and (e) combined and greater than twice the weights of (b) (c), (d) or (e) alone.

2. A composition in accordance with claim 1 further comprising (f) a processing aid comprising an ester of one or more fatty acids, in an amount of less than half the weight of (a).

3. A composition in accordance with claim 2 wherein the mixture is prepared by mixing the ingredients in the order: thermoplastic block copolymer (a), sinterable particulate solids wax (c), stiffening agents (d) and (e), oil (b), and processing aids (f).

4. A composition in accordance with Claim 2 or Claim 3 wherein said ester is an acetyl ricinoleate ester.

5. A composition in accordance with claim 4 wherein said ester is methyl acetyl ricinoleate or butyl acetyl ricinoleate.

6. A composition in accordance with any one of claims 1 to 5 wherein said beta"-alumina particulate solids have particle sizes from 0.1 to 850 microns.

7. A composition in accordance with claim 6 wherein the average particle size of said beta"-alumina particulate is at least 3.5 microns.

8. A composition in accordance with claim 7 wherein the average particle size of the beta"-alumina solids is from 3.5 to 20 microns.

9. A composition in accordance with any one of claims 1 to 8 wherein said beta"-alumina particulate solids comprise 8.85 weight percent $Na_2O$, 0.75 weight percent $Li_2O$ and 90.4 weight percent $Al_2O_3$.

10. A composition in accordance with any one of claims 1 to 9 wherein the block copolymer component comprises radial block copolymer.

11. A composition in accordance with any one of claims 1 to 10 wherein said first aromatic block comprises a polymer of styrene.

12. A composition in accordance with any one of claims 1 to 11 wherein said second block comprises a polymer of butadiene.

13. A composition in accordance with Claim 12 wherein said polymer of butadiene comprises an unsaturated polymer.

14. A composition in accordance with any one of claims 1 to 13 wherein said second polymer comprises a polyindene thermoplastic.

15. A composition in accordance with any one of claims 1 to 14 wherein said block copolymer has a weight exceeding the combined weights of (b), (c), (d), (e) and (f).

16. A composition in accordance with any one of claims 1 to 15 wherein said radial block copolymer has molecular weight (Mw) of from 100,000 to 200,000.

17. A composition in accordance with any one of Claims 1 to 16 wherein said radial block copolymer has a specific gravity of from 0.9 to 1.0.

18. A composition in accordance with any one of claims 1 to 17 wherein said radial block copolymer has an apparent viscosity of from 40—50 thousand poise at $10^{-1}$ sec. at 20 to 25°C.

19. A method of producing a molded body which comprises extruding a moldable composition in accordance with any one of claims 1 to 18 over a mandrel to form a tubular body from an extrusion die wherein the ratio of the length of the die to the wall thickness of said tubular body is at least 5:1.

20. A method in accordance with claim 19 wherein the composition is extruded at a temperature of from 135 to 150°C.

21. A method in accordance with claim 20 wherein the composition is extruded at a temperature of from 137° to 145°C.

22. A method in accordance with any one of claims 19 to 21 wherein the extruder is heated prior to extrusion of the composition.

23. A method in accordance with any one of claims 19 to 22 wherein the extruded tubular body is cut from the die, placed upon another mandrel and cooled to ambient temperature.

24. A method in accordance with any one of claims 19 to 23 wherein the extruded tubular green body is heated to burn out the binder and sinter the particulate solids.

25. A method of producing a molded body comprising loading a moldable composition in accordance with any one of claims 1 to 18 into a mold member having a cavity and a recess in the cavity, the mixture being located such that a first amount is provided in the cavity adjacent the recess and a second amount is provided in said recess; applying heat and pressure to the first and second amounts between said mold member and a second mold member to urge together the first and second amounts; and maintaining the heat and pressure for a time sufficient to knit together portions of the first and second amounts in conformity with the cavity.

26. A method in accordance with Claim 25 wherein the beta''-alumina particulate solids have a particle size distribution of from 0.1 to 1500 microns.

27. A method in accordance with Claim 25 or Claim 26 further comprising heating the molded composition to drive of the sacrificial binder and to sinter said particulate solids.

28. A method in accordance with any one of claims 25 to 27 wherein the second mold member has a cavity and a recess adjacent the perimeter of the mold in the cavity, the composition is loaded therein, such that a third amount is provided in the recess of said second mold member; the mold members are closed such that said recesses of said first and second mold members are aligned; and the application of heat and pressure urges together said first, second and third amounts; said heat and pressure for a time sufficient to knit together the three amounts in conformity with the cavities.

29. A method in accordance with Claim 28, wherein said second mold member has parallel channels in said cavity aligned perpendicular to the length of said mold member.

30. A method in accordance with any one of claims 25 to 29 wherein said radial block copolymer comprises from 30 to 50% by weight styrene.

31. A method of producing a molded body which comprises: forming a tubular green body from a moldable composition in accordance with any one of claims 1 to 18 forming an end cap for the tubular green body from the said composition, applying pressure and ultrasonic vibrations to the end cap and the tubular green body whilst in contact with each other, the said pressure and vibrations being sufficient to fuse the binder at the interface between the tubular green body and the end cap.

32. A method in accordance with Claim 31 wherein said end cap is disc shaped.

33. A method in accordance with Claim 31 wherein said end-cap is hemispherically shaped.

34. A method in accordance with any one of claims 31 to 33 wherein the ultrasonic vibrations are applied by means of an ultrasonic horn to said tubular green body and end-cap between a tubular mandrel and said ultrasonic horn, said mandrel having a shaped end of desired configuration and the ultrasonic horn having a female mold shape adapted to receive said mandrel with said tubular body disposed therein.

35. A method in accordance with claim 34, wherein said tubular green body has faces perpendicular to length of said body.

36. A method in accordance with claim 34 or 35 wherein said end-cap is centrally placed on top of said mandrel prior to applying said pressure and ultrasonic vibrations.

37. A method in accordance with claim 34 or 35 wherein said end-cap is placed up into said ultrasonic horn prior to applying said pressure and ultrasonic vibrations.

38. A method in accordance with any one of claims 34 to 37 wherein the mandrel and said ultrasonic horn are hemispherical.

39. A method in accordance with any one of claims 31 to 38 wherein ultrasonic vibrations are applied for a period prior to simultaneous application of ultrasonic vibrations and pressure.

40. A method in accordance with any one of claims 31 to 39 wherein pressure only is applied for a period after simultaneous application of ultrasonic vibrations and pressure.

41. A method in accordance with any one of claims 31 to 40 wherein said tubular green body is rotated during said application of ultrasonic vibrations.

42. A method in accordance with any one of claims 1 to 41 wherein said tubular green body is formed by extrusion.

43. A method in accordance with any one of claims 1 to 42 further comprising heating the end-capped tubular green body to drive off the sacrificial binder and to sinter the particulate solids.

**Patentansprüche**

1. Formmasse aus einem Gemisch aus 40 bis 60 Volumenprozent sinterbaren Beta-aluminiumoxyd-Feststoffteilchen und 60 bis 40 Volumenprozent verlierbarem organischem Bindemittel, dadurch gekennzeichnet, dass das verlierbare Bindemittel besteht aus:

(a) einem thermoplastischen Blockcopolymeren, ausgewählt aus der lineare, radiale und lineare sowie radiale Blockcopolymere umfassenden Gruppe, wobei diese Blockcopolymeren einen ersten aromatischen Block, der bei 20—25°C glasartig oder kristallin ist und einen Erweichungspunkt von 80 bis 250°C besitzt, und einen zweiten aliphatischen Block aufweisen, der sich von besagtem ersten Block unterscheidet und sich bei Temperaturen von 15°C unterhalb bis 100°C oberhalb jenes Erweichungspunkts des besagten ersten Blocks als Elastomer verhält;

(b) mindestens einem Oel, von dem mindestens 75 Gewichtsprozent im Bereich von 285 bis 560°C sieden und das eine Viskosität von 30 bis 220 Saybolt-Universalsekunden (SUS) bei 100°C und einen Anilinpunkt im Bereich von 75 bis 125°C aufweist;

(c) mindestens einem Wachs, das bei einer Temperatur von 55°C bis 80°C schmilzt und von dem mindestens 75 Gewichtsprozent bei Temperaturen im Bereich von 315°C bis 90°C sieden;

(d) mindestens einem ersten versteifenden thermoplastischen Polymeren, das bei 20—25°C glasartig oder kristallin ist und einen Erweichungspunkt zwischen ungefähr 80 und 250°C aufweist und mit dem Blockcopolymeren (a) assoziierbare, aromatische Monomereinheiten enthält; und

(e) mindestens einem zweiten versteifenden, thermoplastischen Polymeren, das sich vom besagten ersten Polymeren unterscheidet und das bei 20°—25°C glasartig oder kristallin ist und einen Erweichungspunkt zwischen ungefähr 80 und 250°C aufweist und mit dem Blockcopolymeren (a) assoziierbare, aromatische Monomereinheiten enthält, wobei das Gewicht von (a) grösser als das Gesamtgewicht von (b) und (c), grösser als das Gesamtgewicht von (d) und (e) sowie grösser als zweimal das Gewicht von (b), (c), (d) oder (e) für sich ist.

2. Masse nach Anspruch 1, ferner enthaltend (f) ein aus einem Ester einer oder mehrerer Fettsäuren bestehendes Verarbeitungshilfsmittel in einer Menge, die weniger als die Hälfte des Gewichts von (a) beträgt.

3. Masse nach Anspruch 2, worin das Gemisch durch Vermischen der Bestandteile in der Reihenfolge: thermoplastisches Blockcopolymer (a), sinterbare feste Wachsteilchen (c), Versteifungsmittel (d) und (e) Öl (b) und Verarbeitungshilfsmittel (f) hergestellt wird.

4. Masse nach Anspruch 2 oder 3, worin dieser Ester ein Acetylricinoleatester ist.

5. Masse nach Anspruch 4, worin dieser Ester Methylacetylricinoleat oder Butyl-acetylricinoleat ist.

6. Masse nach einem der Ansprüche 1 bis 5, worin diese Beta-aluminiumoxyd-Feststoffteilchen Teilchengrössen von 0,1 bis 850 Mikron aufweisen.

7. Masse nach Anspruch 6, worin die durchschnittliche Teilchengrösse dieser Beta-aluminiumoxyd-Teilchen mindestens 3,5 Mikron beträgt.

8. Masse nach Anspruch 7, worin die durchschnittliche Teilchengrösse der Beta-aluminiumoxyd-Feststoffe 3,5 bis 20 Mikron beträgt.

9. Masse nach einem der Ansprüche 1 bis 8, worin diese Beta-aluminiumoxyd-Feststoffteilchen aus 8,85 Gewichtsprozent $Na_2O$, 0,75 Gewichtsprozent $Li_2O$ und 90,4 Gewichtsprozent $Al_2O_3$ bestehen.

10. Masse nach einem der Ansprüche 1 bis 9, worin die Blockcopolymerkomponente aus einem radialen Blockcopolymeren besteht.

11. Masse nach einem der Ansprüche 1 bis 10, worin dieser erste aromatische Block aus einem Styrolpolymeren besteht.

12. Masse nach einem der Ansprüche 1 bis 11, worin dieser zweite Block aus einem Butadienpolymeren besteht.

13. Masse nach Anspruch 12, worin dieses Butadienpolymer aus einem ungesättigten Polymeren besteht.

14. Masse nach einem der Ansprüche 1 bis 13, worin dieses zweite Polymer aus einem thermoplastischen Polyinden besteht.

15. Masse nach einem der Ansprüche 1 bis 14, worin das Gewicht dieses Blockcopolymeren das Gesamtgewicht von (b), (c), (d), (e) und (f) übersteigt.

16. Masse nach einem der Ansprüche 1 bis 15, worin dieses radiale Blockcopolymer ein Molekulargewicht (Mg) von 100 000 bis 200 000 aufweist.

17. Masse nach einem der Ansprüche 1 bis 16, worin dieses radiale Blockcopolymer ein spezifisches Gewicht von 0,9 bis 1,0 aufweist.

18. Masse nach einem der Ansprüche 1 bis 17, worin dieses radiale Blockcopolymer eine scheinbare Viskosität von 40 000—45 000 Poise bei $10^{-1}$ Sek. und 20 bis 25°C aufweist.

19. Verfahren zur Herstellung eines Formkörpers, darin bestehend, dass man eine Formmasse nach einem der Ansprüche 1 bis 18 über einen Dorn zu Bildung eines schlauchförmigen Körpers aus einem

Extrusionswerkzeug auspresst, worin das Verhältnis der Länge des Werkzeugs zur Banddicke jenes rohrförmigen Körpers mindestens 5:1 beträgt.

20. Verfahren nach Anspruch 19, worin die Masse bei einer Temperatur von 135 bis 150°C extrudiert wird.

21. Verfahren nach Anspruch 20, worin die Masse bei einer Temperatur von 137 bis 145°C extrudiert wird.

22. Verfahren nach einem der Ansprüche 19 bis 21, worin der Extruder vor der Extrusion der Masse erhitzt wird.

23. Verfahren nach einem der Ansprüche 19 bis 22, worin der extrudierte rohrförmige Körper vom Werkzeug abgeschnitten, auf einen anderen Dorn gelegt und auf Umgebungstemperatur abgekühlt wird.

24. Verfahren nach einem der Ansprüche 19 bis 23, worin der extrudierte rohrförmige Grünling zum Ausbrennen des Bindemittels und Sintern der Feststoffteilchen erhitzt wird.

25. Verfahren zur Herstellung eines Formkörpers, darin bestehend, dass man ein Formglied mit einem Hohlraum und einer Ausnehmung im Hohlraum mit einer Formmasse nach einem der Ansprüche 1 bis 18 beschickt, wobei das Gemisch so angeordnet wird, dass eine erste Menge in den Hohlraum neben der Ausnehmung und eine zweite Menge in diese Ausnehmung eingebracht wird, Hitze und Druck auf die ersten und zweiten Mengen zwischen diesem Formglied und einem zweiten Formglied einwirken lässt, um die ersten und zweiten Mengen gegeneinander zu drücken; und die Hitze und den Druck genügend lange aufrecht erhält, um Antriebe der ersten und zweiten menge entsprechend dem Hohlraum miteinander zu vereinigen.

26. Verfahren nach Anspruch 25, worin die Beta-aluminiumoxyd-Feststoffteilchen eine Teilchengrössenverteilung von 0,1 bis 1500 Mikron aufweisen.

27. Verfahren nach Anspruch 25 oder 26, ferner darin bestehend, dass man die geformte Masse zum Abtreiben des verlierbaren Bindemittels und zum Sintern dieser Feststoffteilchen erhitzt.

28. Verfahren nach einem der Ansprüche 25 bis 27, worin das zweite Formglied einen Hohlraum und neben dem Aussenrand der Form in dem Hohlraum eine Ausnehmung aufweist, mit der Masse so beschickt wird, das eine dritte Menge in die Ausnehmung dieses zweiten Formglieds eingebracht wird, die Formglieder so geschlossen werden, dass diese Ausnehmungen in jenen ersten und zweiten Formgliedern aufeinander ausgerichtet sind, und diese ersten, zweiten und dritten Mengen durch Einwirkung von Hitze und Druck gegeneinander gedrückt werden, wobei diese Hitze und dieser Druck genügend lange einwirken, um die drei Mengen entsprechend den Hohlräumen zu vereinigen.

29. Verfahren nach Anspruch 28, worin dieses zweite Formglied senkrecht zu dessen Länge ausgerichtete parallele Kanäle in diesem Hohlraum aufweist.

30. Verfahren nach einem der Ansprüche 25 bis 29, worin dieses radiale Blockcopolymer aus 30 bis 50 Gew.-% Styrol besteht.

31. Verfahren zur Herstellung eines Formkörpers, darin bestehend, dass man aus einer Formmasse nach einem der Ansprüche 1 bis 18 einen rohrförmigen Grünling bildet, aus dieser Masse eine Endkappe für den rohrförmigen Grünling formt, Druck und Ultraschallschwingungen auf die Endkappe und den rohrförmigen Grünling in gegenseitiger Berührung einwirken lässt, wobei dieser Druck und diese Schwingungen dazu ausreichen, das Bindemittel an der Grenzfläche zwischen dem rohrförmigen Grünling und der Endkappe zu verschmelzen.

32. Verfahren nach Anspruch 31, worin diese Endkappe scheibenförmig ist.

33. Verfahren nach Anspruch 31, worin diese Endkappe halbkugelförmig ist.

34. Verfahren nach einem der Ansprüche 31 bis 33, worin die Ultraschallschwingungen mittels eines Ultraschallhorns auf diesen rohrförmigen Grünling und die Endkappe zwischen einem rohrförmigen Dorn und diesem Ultraschallhorn übertragen werden, wobei dieser Dorn ein mit der gewünschten Konfiguration geformtes Ende und das Ultraschallhorn eine Matrizengestalt zur Aufnahme dieses Dorns mit dem darin angeordneten rohrförmigen Körper aufweisen.

35. Verfahren nach Anspruch 34, worin dieser rohrförmige Grünling Flächen senkrecht zu seiner Länge aufweist.

36. Verfahren nach Anspruch 34 oder 35, worin diese Endkappe vor der Einwirkung dieses Drucks und der Ultraschallschwingungen mittig auf diesen Dorn gelegt wird.

37. Verfahren nach Anspruch 34 oder 35, worin diese Endkappe vor der Einwirkung dieses Drucks und der Ultraschallschwingungen in jenes Ultraschallhorn eingebracht wird.

38. Verfahren nach einem der Ansprüche 34 bis 37, worin der Dorn und jenes Ultraschallhorn halbkugelförmig sind.

39. Verfahren nach einem der Ansprüche 31 bis 38, worin man Ultraschallschwingungen für einen Zeitraum vor der gleichzeitigen Einwirkung der Ultraschallschwingungen und des Drucks einwirken lässt.

40. Verfahren nach einem der Ansprüche 31 bis 39, worin man für einen Zeitraum nach der gleichzeitigen Einwirkung der Ultraschallschwingungen und des Drucks nur Druck einwirken lässt.

41. Verfahren nach einem der Ansprüche 31 bis 40, worin dieser rohrförmige Grünling während jener Einwirkung von Ultraschallschwingungen rotiert wird.

42. Verfahren nach einem der Ansprüche 1 bis 42, worin dieser rohrförmige Grünling durch Extrusion gebildet wird.

43. Verfahren nach einem der Ansprüche 1 bis 42, ferner darin bestehend, dass man den mit der

Endkappe versehenen, rohrformigen Grünling zum Abtreiben des verlierbaren Bindemittels und zum Sintern der Feststoffteilchen erhitzt.

**Revendications**

1. Composition moulable comprenant un mélange de 40 à 60% en volume de solides particulaires d'alumine bêta frittable et 60 à 40% en volume de liant organique éliminable, caractérisée en ce que le liant éliminable comprend:

(a) un copolymère séquencé thermoplastique choisi dans la classe consistant en les copolymères séquencés linéaires, radiaux et linéaires et radiaux, lesquels copolymères séquencés comprennent une première séquence aromatique qui est vitreuse ou cristalline à 20—25°C et qui a un point de ramollissement de 80 à 250°C et une seconde séquence aliphatique qui est différente de la première séquence et se comporte comme un élastomère à des températures de 15°C au-dessous à 100°C au-delà de ce point de ramolissement de la première séquence;

(b) au moins une huile qui bout pour au moins 75% en poids dans un intervalle de 285 à 560°C et qui a une viscosité de 30 à 220 Secondes Saybolt Universelles (SSU) à 100°C et un point d'aniline dans un intervalle de 75°C à 125°C;

(c) au moins une cire fondant à une température de 55°C à 80°C et qui bout pour au moins 75% en poids à une température dans un intervalle de 315°C à 490°C;

(d) au moins un premier polymère thermoplastique raffermissant qui est vitreux ou cristallin à 20—25°C et qui a un point de ramollissement entre environ 80°C et 250°C et comprend des unités monomères aromatiques associables au copolymère séquencé (a); et

(e) au moins un second polymère thermoplastique raffermissant, différent de ce premier polymère et qui est vitreux ou cristallin à 20—25°C, et qui a un point de ramollissement entre environ 80°C et 250°C et comprend des unités monomères aromatiques associables au copolymère séquencé (a), le poids de (a) étant supérieur aux poids de (b) et (c) cumulés, supérieur aux poids de (d) et (e) cumulés et supérieur au double des poids de (b), (c), (d) ou (e) seuls.

2. Composition suivant la revendication 1, comprenant en outre

(f) un auxiliare de mise en oeuvre comprenant un ester d'un ou plusieurs acides gras, en une quantité inférieure à la moitié du poids de (a).

3. Composition suivant la revendication 2, dans laquelle le mélange est préparé par mélange des constituants dans l'ordre: copolymère séquencé thermoplastique (a), solides particulaires frittables, cire (c), agents raffermissants (d) et (e), huile (b) et auxiliare de mise en oeuvre (f).

4. Composition suivant la revendication 4, dans laquelle l'ester est un ester acétylricinoléique.

5. Composition suivant la revendication 4, dans laquelle l'ester est l'acétylricinoléate de méthyle ou l'acétylricinoléate de butyle.

6. Composition suivant l'une quelconque des revendications 1 à 5, dans laquelle les solides particulaires d'alumine bêta ont une granulométrie de 0,1 à 850 µmètres.

7. Composition suivant la revendication 6, dans laquelle le granulométrie moyenne des solides particulaires d'alumine bêta est d'au moins 3,5 µmètres.

8. Composition suivant la revendication 8, dans laquelle la granulométrie moyenne des solides particulaires d'alumine bêta est de 3,5 à 20 µmètres.

9. Composition suivant l'une quelconque des revendications 1 à 8, dans laquelle les solides particulaires d'alumine bêta comprennent 8,85% en poids de $Na_2O$, 0,75% en poids de $Li_2O$ et 90,4% en poids d'$Al_2O_3$.

10. Composition suivant l'une quelconque des revendications 1 à 9, dans laquelle le copolymère séquencé comprend un copolymère séquencé radial.

11. Composition suivant l'une quelconque des revendications 1 à 10, dans laquelle la première séquence aromatique comprend un polymère de styrène.

12. Composition suivant l'une quelconque des revendications 1 à 11, dans laquelle la seconde séquence comprend un polymère de butadiène.

13. Composition suivant la revendication 12, dans laquelle le polymère de butadiène comprend un polymère insaturé.

14. Composition suivant l'une quelconque des revendications 1 à 13, dans laquelle le second polymère comprend un polyindène thermoplastique.

15. Composition suivant l'une quelconque des revendications 1 à 14, dans laquelle le copolymère séquencé a un poids excédant les poids cumulés de (b), (c), (d), (e) et (f).

16. Composition suivant l'une quelconque des revendications 1 à 15, dans laquelle le copolymère séquencé radial a un poids moléculaire (Mw) de 100.000 à 200.000.

17. Composition suivant l'une quelconque des revendications 1 à 16, dans laquelle le copolymère séquencé radial a une densité de 0,9 à 1,0.

18. Composition suivant l'une quelconque des revendications 1 à 17, dans laquelle le copolymère séquencé radial a une viscosité apparente de 40—50 mille poises à $10^{-1}$ secondes à 20—25°C.

19. Procédé pour produire un corps moulé, qui comprend l'extrusion d'une composition moulable suivant l'une quelconque des revendications 1 à 18 sur un mandrin pour former un corps tubulaire au sortir

d'une filière d'extrusion, dans laquelle le rapport de la longueur de la filière à l'épaisseur de paroi du corps tubulaire est d'au moins 5:1.

20. Procédé suivant la revendication 19, dans lequel la composition est extrudée à une température de 135 à 150°C.

21. Procédé suivant la revendication 20, dans lequel la composition est extrudée à une température de 137 à 145°C.

22. Procédé suivant l'une quelconque des revendications 19 à 21, dans lequel l'extrudeuse est chauffée avant l'extrusion de la composition.

23. Procédé suivant l'une quelconque des revendications 19 à 22, dans lequel le corps tubulaire extrudé est détaché de la filière par tranchage, placé sur un autre mandrin et refroidi jusqu'à la température ambiante.

24. Procédé suivant l'une quelconque des revendications 19 à 23, dans lequel le corps tubulaire extrudé vert est chauffé pour éliminer par combustion le liant et fritter les solides particulaires.

25. Procédé pour produire un corps moulé qui comprend l'introduction d'une composition moulable suivant l'une quelconque des revendications 1 à 18 dans un organe de moulage comportant une cavité et un creux dans la cavité, le mélange étant inséré de façon qu'une première quantité soit logée dans la cavité au voisinage du creux et qu'une seconde quantité soit logée dans le creux, l'exercice de la chaleur et de la pression sur la première quantité et la seconde entre l'organe de moulage et un second organe de moulage pour presser ensemble la première quantité et la seconde, et l'entretien de la chaleur et de la pression pendant une durée suffisante pour lier ensemble des parties de la première quantité et de la seconde en conformité avec la cavité.

26. Procédé suivant la revendication 25, dans lequel les solides particulaires d'alumine bêta ont un spectre granulométrique de 0,1 à 1.500 µmètres.

27. Procédé suivant la revendication 25 ou la revendication 26, qui comprend en outre le chauffage de la composition moulée pour chasser le liant éliminable et fritter les solides particulaires.

28. Procédé suivant l'une quelconque des revendications 25 à 27, dans lequel le second organe de moulage comporte une cavité et un creux au voisinage du contour du moule dans la cavité, la composition y est insérée de façon qu'une troisième quantité soit logée dans le creux du second organe de moulage, les organes de moulage sont fermés de manière que les creux du premier organe de moulage et du second soient alignés et l'exercise de la chaleur et de la pression presse ensemble la première quantité, la seconde et la troisième, la chaleur et la pression étant entretenues pendant un temps suffisant pour lier ensemble les trois quantités en conformité avec les cavités.

29. Procédé suivant la revendication 28, dans lequel le second organe de moulage comporte des canaux parallèles dans la cavité alignés perpendiculairement à la longueur de l'organe de moulage.

30. Procédé suivant l'une quelconque des revendications 25 à 29, dans lequel le copolymère séquencé radial comprend 30 à 50% en poids de styrène.

31. Procédé pour produire un corps moulé qui comprend le façonnage d'un corps tubulaire vert au départ d'une composition moulable suivant l'une quelconque des revendications 1 à 18, le façonnage d'une coiffe d'extrémité pour le corps tubulaire vert au départ de la composition, l'exercice de la pression et de vibrations ultrasoniques sur la coiffe d'extrémité et le corps tubulaire vert, tandis qu'ils sont en contact l'un avec l'autre, la pression et les vibrations étant suffisantes pour fusionner le liant à l'interface entre le corps tubulaire vert et la coiffe d'extrémité.

32. Procédé suivant la revendication 31, dans lequel la coiffe d'extrémité est en forme de disque.

33. Procédé suivant la revendication 31, dans lequel la coiffe d'extrémité est de forme hémisphérique.

34. Procédé suivant l'une quelconque des revendications 31 à 33, dans lequel les vibrations ultrasoniques sont exercées au moyen d'un cornet ultrasonique sur le corps tubulaire vert et la coiffe d'extrémité entre un mandrin tubulaire et la corne ultrasonique, le mandrin ayant une extrémité conformée de la configuration souhaitée et la corne ultrasonique ayant une forme de moule femelle propre à recevoir le mandrin avec le corps tubulaire disposé dedans.

35. Procédé suivant la revendication 34, dans lequel le corps tubulaire vert présente des faces perpendiculaires à la longueur du corps.

36. Procédé suivant la revendication 34 ou 35, dans lequel la coiffe d'extrémité est posée centralement au sommet du mandrin avant l'exercise de la pression et des vibrations ultrasoniques.

37. Procédé suivant les revendications 34 ou 35, dans lequel la coiffe d'extrémité est posée dans la corne ultrasonique avant l'exercise de la pression et des vibrations ultrasoniques.

38. Procédé suivant l'une quelconque des revendications 34 à 37, dans lequel le mandrin et la corne ultrasonique sont hémisphériques.

39. Procédé suivant l'une quelconque des revendications 31 à 38, dans lequel les vibrations ultrasoniques sont exercées pendant une durée précédant l'exercise simultané des vibrations ultrasoniques et de la pression.

40. Procédé suivant l'une quelconque des revendications 31 à 39, dans lequel la pression uniquement est exercée pendant une durée succédant à l'exercice simultané des vibrations ultrasoniques et de la pression.

41. Procédé suivant l'une quelconque des revendications 31 à 40, dans lequel le corps tubulaire vert est mis en rotation pendant l'exercice des vibrations ultrasoniques.

42. Procédé suivant l'une quelconque des revendications 1 à 41, dans lequel le corps tubulaire vert est façonné par extrusion.

43. Procédé suivant l'une quelconque des revendications 1 à 42, qui comprend en outre le chauffage du corps tubulaire vert portant la coiffe d'extrémité en vue de l'expulsion du liant éliminable et du frittage des solides particulaires.

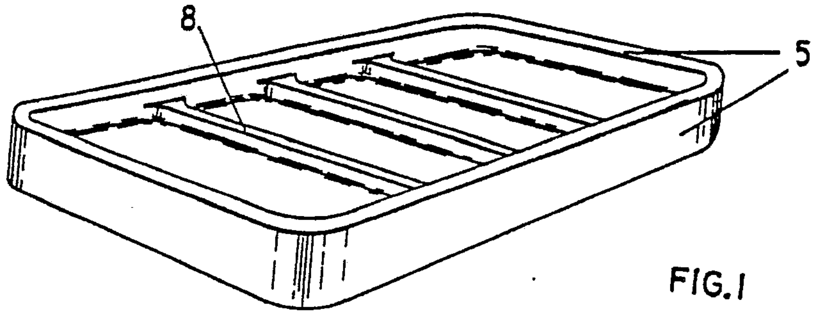


FIG. I

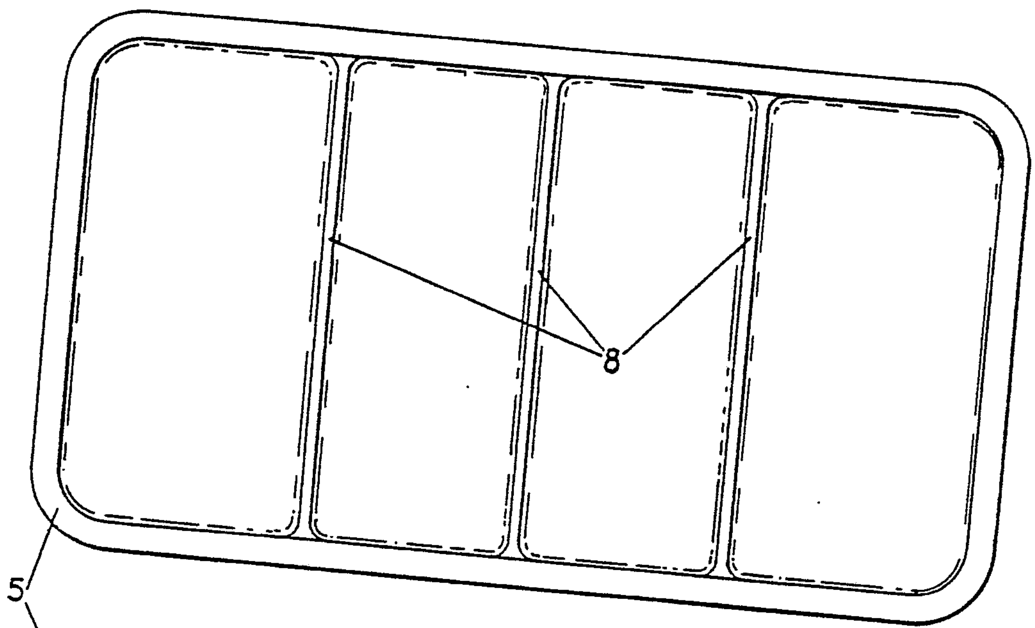


FIG. 2

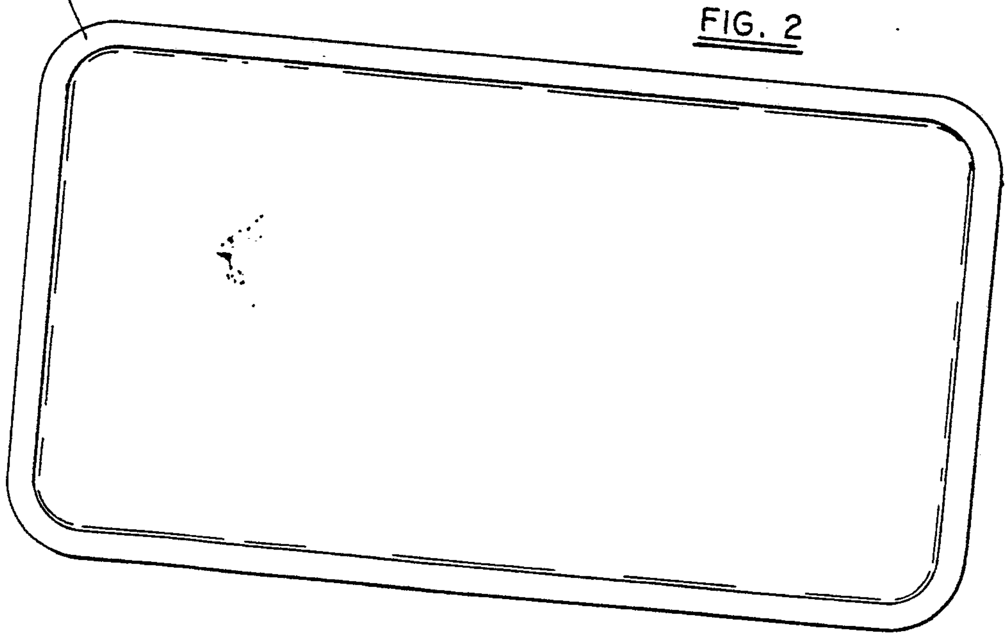

FIG. 3

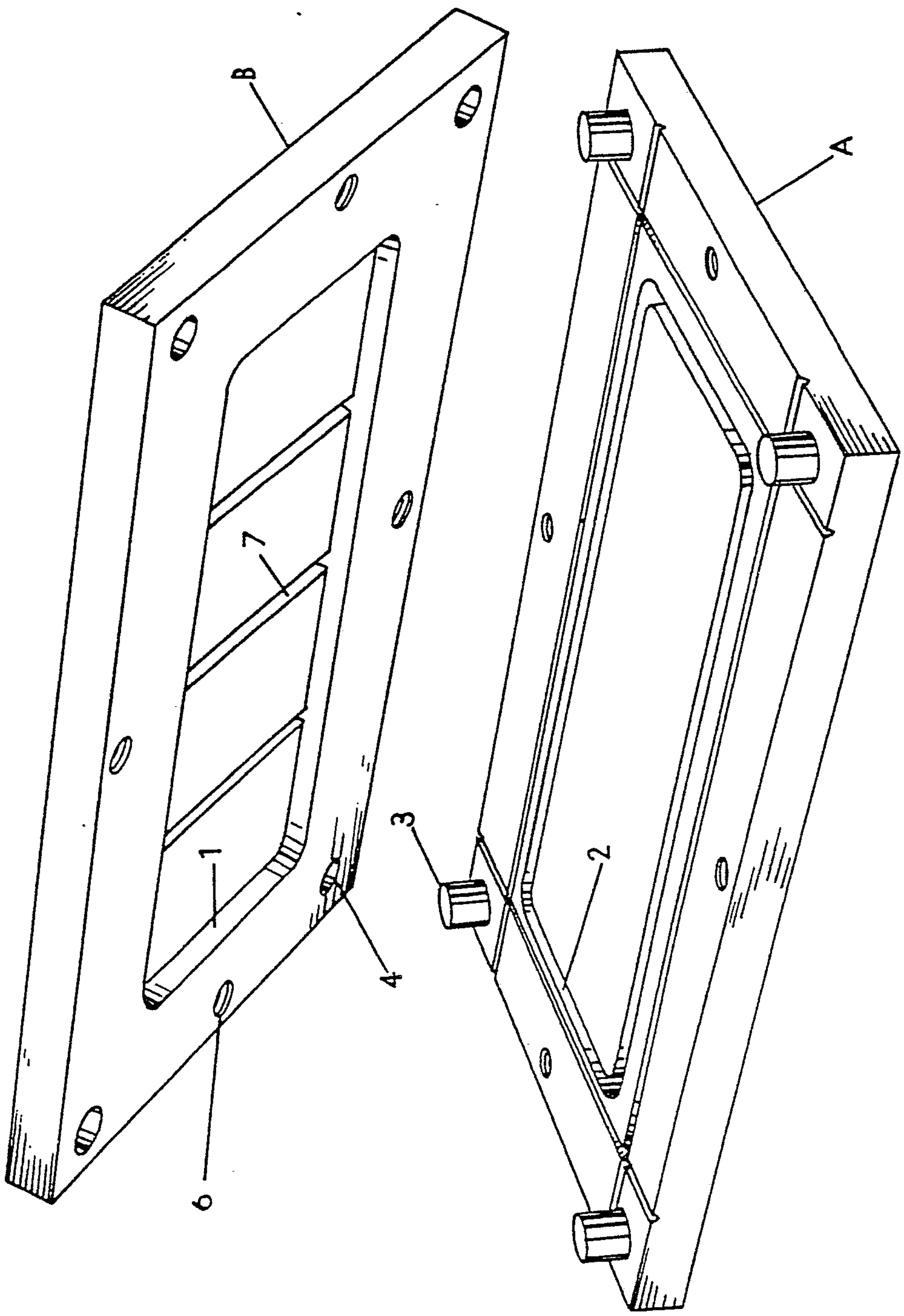


FIG. 4

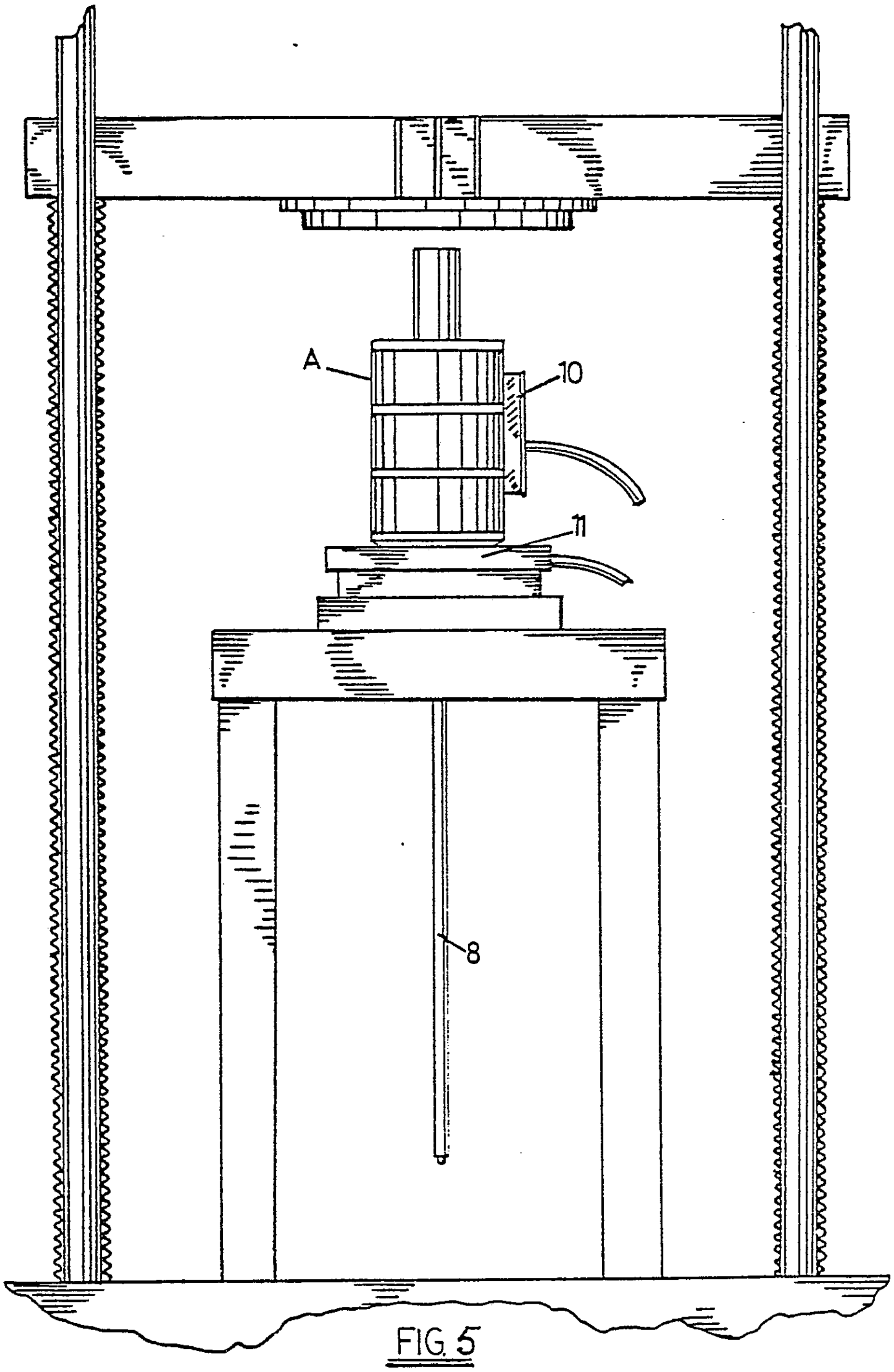


FIG. 5

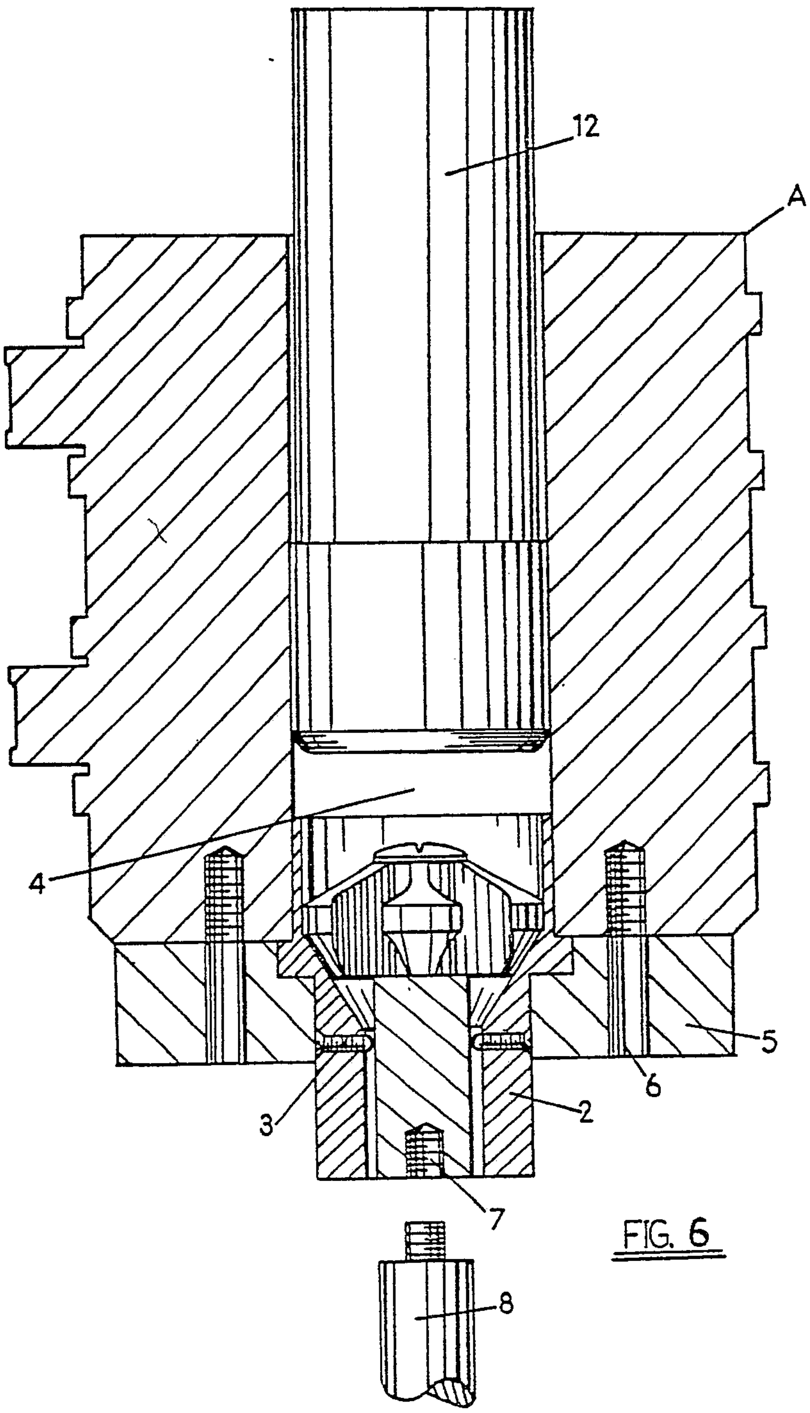


FIG. 6

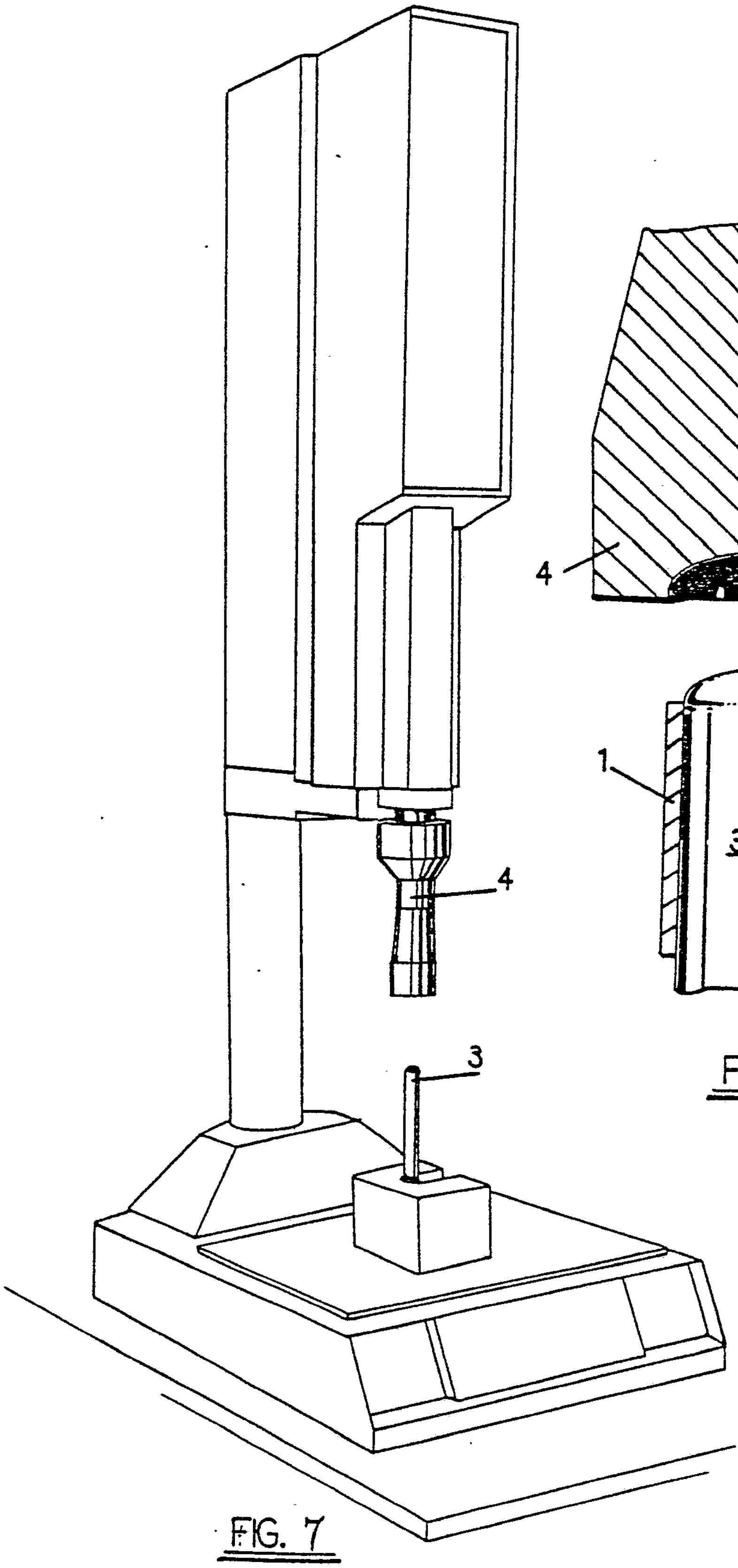


FIG. 7

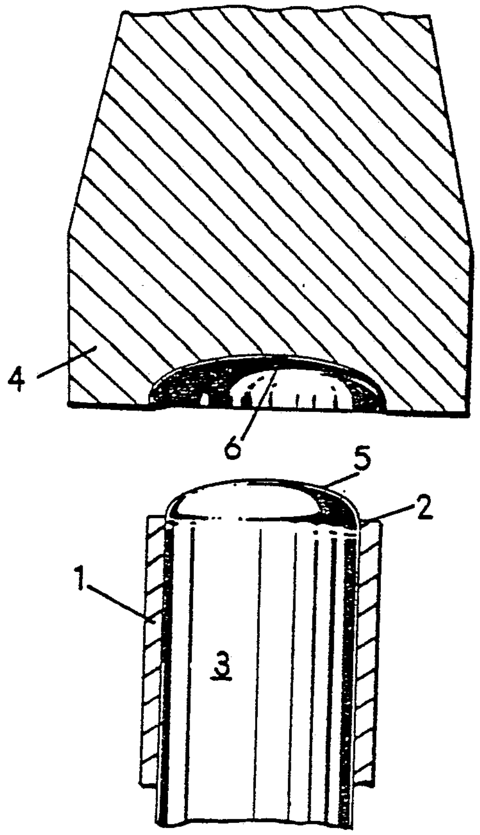


FIG. 8